(19)

**Europäisches Patentamt**
**European Patent Office**
**Office européen des brevets**

(11) **EP 3 283 575 B1**

(12) **EUROPÄISCHE PATENTSCHRIFT**

(45) Veröffentlichungstag und Bekanntmachung des
Hinweises auf die Patenterteilung:
**14.08.2019 Patentblatt 2019/33**

(21) Anmeldenummer: **16713855.1**

(22) Anmeldetag: **30.03.2016**

(51) Int Cl.:
***C09D 5/00*** *(2006.01)*

(86) Internationale Anmeldenummer:
**PCT/EP2016/056868**

(87) Internationale Veröffentlichungsnummer:
**WO 2016/165936 (20.10.2016 Gazette 2016/42)**

(54) **BESCHICHTUNGSVERFAHREN**

COATING METHOD

PROCÉDÉ DE REVÊTEMENT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **17.04.2015 EP 15163989**

(43) Veröffentlichungstag der Anmeldung:
**21.02.2018 Patentblatt 2018/08**

(73) Patentinhaber: **Akzo Nobel Coatings International
B.V.
6824 BM Arnhem (NL)**

(72) Erfinder:
• **JÖGE, Frank**
**48324 Sendenhorst (DE)**
• **RESSEL, Jörg**
**48165 Münster-Hiltrup (DE)**

(74) Vertreter: **Akzo Nobel IP Department
Velperweg 76
6824 BM Arnhem (NL)**

(56) Entgegenhaltungen:
**EP-A1- 1 172 396      WO-A1-2010/094764
DE-A1-102009 021 071**

**Beschreibung**

Die vorliegende Erfindung betrifft ein Verfahren zum zumindest einseitigen Aufbringen einer Decklackschicht auf ein Substrat umfassend als Schritt (a) eine zumindest teilweise Beschichtung wenigstens einer zumindest teilweise mit wenigstens einer Grundierungsschicht beschichteten Metalloberfläche eines Substrats mit einer wässrigen Beschichtungszusammensetzung, welche wenigstens ein darin gelöstes oder dispergiertes Polymer umfasst, wobei die Beschichtungszusammensetzung zudem wenigstens ein gemischtes Hydroxid der allgemeinen Formel (I) enthält und das Verfahren ein Coil-Coating-Verfahren ist, eine durch dieses Verfahren erhältliches zumindest einseitig auf das Substrat aufgebrachte Decklackschicht, ein zumindest teilweise und zumindest einseitig mit einer Decklackschicht gemäß diesem Verfahren beschichtetes Substrat sowie eine Verwendung dieser Beschichtungszusammensetzung zur zumindest teilweisen Beschichtung wenigstens einer zumindest teilweise mit wenigstens einer Grundierungsschicht beschichteten Metalloberfläche eines Substrats mit einer Decklackschicht im Coil-Coating-Verfahren.

Zur Herstellung von flachen und dünnwandigen metallischen Bauteilen wie beispielsweise Automobil-Bauteilen und Karosserie-Bauteilen, aber auch entsprechenden Bauteilen aus dem Bereich der Geräteverkleidungen, Fassadenverkleidungen, Deckenverkleidungen oder Fensterprofilen werden geeignete Metallbleche wie beispielsweise Stahl- oder Aluminiumbleche mittels konventioneller Techniken wie Stanzen und/oder Bohren ausgeformt. Größere metallische Bauteile werden gegebenenfalls durch Verschweißen mehrerer Einzelteile zusammengefügt. Als Rohmaterial zur Herstellung solcher Bauteile werden üblicherweise lange Metallbänder eingesetzt, die durch Walzen des jeweiligen Metalls hergestellt und zum Lagern und zum besseren Transport zu Rollen ("Coils") aufgewickelt werden.

Die genannten metallischen Bauteile müssen dabei üblicherweise gegen Korrosion geschützt werden. Gerade im Automobilbereich sind die Anforderungen an den Korrosionsschutz sehr hoch, insbesondere da seitens der Hersteller oftmals über viele Jahre eine Garantie gegen Durchrostung gewährt wird. Die Korrosionsschutzbehandlung kann dabei am fertigen metallischen Bauteil wie beispielsweise einer zusammengeschweißten Automobilkarosserie vorgenommen werden. In zunehmendem Maße wird die Korrosionsschutzbehandlung jedoch heutzutage zu einem früheren Zeitpunkt, nämlich bereits an den zur Herstellung dieser Bauteile eingesetzten Metallbändern mittels des "Coil-Coating-Verfahrens" vorgenommen.

Daneben ist es aber ebenso erforderlich, dass die Lackbeschichtungen der mittels des Coil-Coating-Verfahrens beschichteten Metallbänder zudem eine ausreichende UV-Beständigkeit, insbesondere gegenüber UV-A-Strahlung, aufweisen.

Unter "Coil-Coating" (Bandbeschichtung) versteht man das kontinuierliche ein- oder beidseitige Beschichten von flachen gewalzten Metallbändern wie beispielsweise von Stahl- oder Aluminiumbändern mit üblicherweise flüssigen Beschichtungszusammensetzungen mit Geschwindigkeiten von ungefähr 60 bis 200 m/min. Die Bandbeschichtung erfolgt dabei üblicherweise im Walzenauftrag mit gegenläufigen Walzen. Die Metallbänder weisen nach Durchführung des Coil-Coating-Verfahrens in der Regel mehrere unterschiedliche Lackschichten auf, von denen wenigstens eine für einen ausreichenden Korrosionsschutz verantwortlich ist. Üblicherweise erfolgt nach einem optionalen Reinigungsschritt des Metallbandes und einer optionalen Auftragung einer dünnen Vorbehandlungsschicht auf das Metallband das Aufbringen einer Grundierungsschicht ("primer") auf die gegebenenfalls vorhandene Vorbehandlungsschicht, gefolgt von dem Auftragen wenigstens einer Decklackschicht auf die Grundierungsschicht. Ein aus dem Stand der Technik bekanntes Coil-Coating-Verfahren ist beispielsweise in WO 2006/079628 A2 offenbart. Da die Metall-(Weiter-)Verarbeitung der so beschichteten Metallbänder üblicherweise erst nach der Lackierung mittels des Coil-Coating-Verfahrens erfolgt, müssen die hierfür eingesetzten Lacke, insbesondere Decklacke, eine sehr hohe mechanische und je nach Einsatzzweck zudem eine sehr hohe Wetter- und/oder Chemikalien-Beständigkeit aufweisen, insbesondere da sie oftmals im Außenbereich eingesetzt werden. Dazu zählt ebenso eine schon vorstehend genannte ausreichende UV-Beständigkeit, insbesondere gegenüber UV-A-Strahlung.

Nachteilig an den im Coil-Coating-Verfahren insbesondere zum Auftrag wenigstens einer Decklackschicht üblicherweise eingesetzten flüssigen Beschichtungszusammensetzungen ist oftmals deren Gehalt an organischen Lösemitteln, insbesondere deren Gehalt an schwerflüchtigen organischen Lösemitteln, was aus ökologischen Gründen bedenklich ist. Üblicherweise ist die Gegenwart von organischen Lösemitteln insbesondere in den zur Herstellung von Decklackschichten mittels des Coil-Coating-Verfahrens eingesetzten Beschichtungszusammensetzungen jedoch notwendig, weil wässrige herkömmliche Beschichtungszusammensetzungen eine ausreichende, insbesondere langanhaltende UV-Beständigkeit, insbesondere gegenüber UV-A-Strahlung, der daraus resultierenden Decklackschichten nicht gewährleisten.

WO 2009/062621 A1 offenbart Beschichtungsmittel zur Herstellung von Füllerschichten, die ein erstes, funktionelle Gruppen aufweisendes Polymerisat und ein zweites Polymerisat und/oder Vernetzungsmittel enthalten. Diese Beschichtungsmittel enthalten zudem anisotrope Teilchen wie gemischte Hydroxide. Auf die so hergestellten Füllerschichten werden weitere Lackschichten aufgetragen. WO 2010/130308 A1 betrifft einen Effektwasserbasislack, der eine flüssigkristalline wässrige Zubereitung enthält, welche wiederum positiv geladene schichtförmige anorganische Teilchen aufweist, deren Ladung zumindest teilweise mit einfach geladenen organischen Anionen kompensiert wird.

Auf die Basislackschichten werden weitere Schichten aufgetragen. WO 2013/056846 A1 betrifft ein Verfahren zur Herstellung einer Korrosionsschutzbeschichtung, welche u.a. ein organische Anionen enthaltendes schichtförmiges Doppelhydroxid enthält. Auf diese Korrosionsschutzbeschichtung werden weitere Lackschichten aufgetragen.

WO 2010/094764 A1 betrifft Entgiftungsverfahren, mit dem eine Pigment-Verbindung ohne akute oder chronische Wasserökotoxizität erhalten werden kann, die mindestens eine Komponente auf Zinkbasis umfasst, die gute, stark toxische Korrosionsschutzeigenschaften von Zinkphosphat $Zn_3(PO_4)_2,0$ bis $4H_2O$ und/oder Zinkoxid aufweist.

EP 1172396 A1 offenbart ein Verfahren zur Herstellung von Copolyesteramidpulvern durch anionische Polymerisation, bei dem man mindestens ein Lactam und mindestens ein Lacton in Lösung in einem Lösungsmittel in Gegenwart eines Katalysators und eines Aktivators copolymerisiert, wobei das Lösungsmittel ein Lösungsmittel für das Lactam ist und die Copolyesteramide in diesem Lösungsmittel unlöslich sind.

DE 102009021071 A1 betrifft Effektwasserbasislacke, enthaltend mindestens eine flüssigkristalline wässrige Zubereitung (WZ) in Anteilen von 1 bis 99 Gew.-%, bezogen auf den Effektwasserbasislack, mindestens ein filmbildendes Polymerisat (FP) und mindestens ein Effektpigment (EP), worin die flüssigkristalline wäßrige Zubereitung (WZ) positiv geladener schichtförmiger anorganischer Teilchen (AT) enthält.

Es besteht ein Bedarf an in einem Coil-Coating-Verfahren zur Herstellung von Decklackschichten einzusetzenden Beschichtungszusammensetzungen, die sowohl ökologisch unbedenklicher sind als die üblicherweise eingesetzten Zusammensetzungen, d.h. die im Wesentlichen frei von organischen Lösemitteln, insbesondere schwerflüchtigen organischen Lösemitteln, sind, aber dennoch keine Nachteile hinsichtlich ihrer Beständigkeit gegenüber UV-Strahlung, insbesondere gegenüber UV-A-Strahlung, aufweisen.

Eine Aufgabe der vorliegenden Erfindung ist es daher, eine Beschichtungszusammensetzung zur Verfügung zu stellen, welche sich zur Herstellung einer Decklackschicht im Coil-Coating-Verfahren eignet und welche keine Nachteile und insbesondere Vorteile gegenüber herkömmlichen im Coil-Coating Verfahren zur Herstellung einer Decklackschicht eingesetzten Beschichtungszusammensetzungen aufweist. Insbesondere ist es eine Aufgabe der vorliegenden Erfindung, eine solche im Coil-Coating-Verfahren einsetzbare Beschichtungszusammensetzung zur Verfügung zu stellen, welche ökologisch unbedenklicher, insbesondere im Wesentlichen frei von organischen Lösemitteln, ist als die üblicherweise eingesetzten Zusammensetzungen, aber dennoch mindestens in gleichem Maße und insbesondere in vorteilhaftem Maße dazu geeignet ist, eine ausreichende und insbesondere langanhaltende Beständigkeit gegenüber UV-Strahlung, insbesondere gegenüber UV-A-Strahlung, zu gewährleisten.

Diese Aufgabe wird gelöst durch den Gegenstand der vorliegenden Patentansprüche und der in der Beschreibung offenbarten bevorzugten Ausführungsformen dieser Gegenstände.

Ein erster Gegenstand der vorliegenden Erfindung, welcher diese Aufgabe löst, ist ein Verfahren zum zumindest einseitigen Aufbringen einer Decklackschicht auf ein Substrat umfassend wenigstens einen Schritt (a), nämlich eine

(a) zumindest teilweise Beschichtung wenigstens einer zumindest teilweise mit wenigstens einer Grundierungsschicht beschichteten Metalloberfläche eines Substrats mit einer wässrigen Beschichtungszusammensetzung, wobei die wässrige Beschichtungszusammensetzung

(A) wenigstens ein darin gelöstes oder dispergiertes Polymer und
(B) gegebenenfalls wenigstens ein darin gelöstes oder dispergiertes Vernetzungsmittel umfasst,

dadurch gekennzeichnet, dass die wässrige Beschichtungszusammensetzung zudem wenigstens ein gemischtes Hydroxid der nachstehenden allgemeinen Formel (I) enthält,

$$\{[(M^{2+}_{(1-x)})(M^{3+}_{(x)})(OH)_2][A^{y-}_{(x/y)}]\}\cdot(H_2O)_n \qquad (I),$$

worin

$M^{2+}$ für zweiwertige metallische Kationen,
$M^{3+}$ für dreiwertige metallische Kationen,
$A^{y-}$ für Anionen mit einer mittleren Wertigkeit y,
$x$ für einen Wert im Bereich von 0,05 bis 0,50 und
$n$ für einen Wert im Bereich von 0 bis 10 steht,

worin die Anionen $A^{y-}$ ausgewählt aus der Gruppe bestehend aus $CO_3^{2-}$, $HCO_3^-$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^-$, $SO_3^{2-}$, $HSO_3^-$, $NO_3^-$ und $OH^-$ sind, und dass das Verfahren ein Coil-Coating-Verfahren ist.

Ein zweiter Gegenstand der vorliegenden Erfindung, welcher diese Aufgabe löst, ist eine Verwendung der im vorstehendem Verfahren eingesetzten wässrigen Beschichtungszusammensetzung, d.h. einer Beschichtungszusammensetzung, die

(A) wenigstens ein darin gelöstes oder dispergiertes Polymer und
(B) gegebenenfalls wenigstens ein darin gelöstes oder dispergiertes Vernetzungsmittel umfasst,

und zudem wenigstens ein gemischtes Hydroxid der nachstehenden allgemeinen Formel (I) enthält,

$$\{[(M^{2+}_{(1-x)})(M^{3+}_{(x)})(OH)_2][A^{y-}_{(x/y)}]\}\cdot(H_2O)_n \qquad (I),$$

worin

$M^{2+}$ für zweiwertige metallische Kationen,
$M^{3+}$ für dreiwertige metallische Kationen,
$A^{y-}$ für Anionen mit einer mittleren Wertigkeit y,
$x$ für einen Wert im Bereich von 0,05 bis 0,50 und
$n$ für einen Wert im Bereich von 0 bis 10 steht,

worin die Anionen $A^{y-}$ ausgewählt aus der Gruppe bestehend aus $CO_3^{2-}$, $HCO_3^-$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^-$, $SO_3^{2-}$, $HSO_3^-$, $NO_3^-$ und $OH^-$ sind, zur zumindest teilweisen Beschichtung wenigstens einer zumindest teilweise mit wenigstens einer Grundierungsschicht beschichteten Metalloberfläche eines Substrats mit einer Decklackschicht im Coil-Coating-Verfahren.

Es wurde überraschend gefunden, dass sich die erfindungsgemäß in Schritt (a) eingesetzte wässrige Beschichtungszusammensetzung im Coil-Coating-Verfahren zum zumindest einseitigen Aufbringen einer Decklackschicht auf ein Substrat eignet. Zudem zeichnet sich die erfindungsgemäß eingesetzte Beschichtungszusammensetzung dadurch aus, dass sie wässrig und somit ökologisch unbedenklicher als herkömmliche organische Lösemittel enthaltende Beschichtungszusammensetzungen ist.

Es wurde insbesondere überraschend gefunden, dass durch die speziellen Bestandteile der erfindungsgemäß eingesetzten Beschichtungszusammensetzung, insbesondere durch die Gegenwart des wenigstens einen gemischten Hydroxids der allgemeinen Formel (I) in der wässrigen Beschichtungszusammensetzung, eine gute Beständigkeit der daraus resultierenden Decklackschicht gegenüber UV-Strahlung, insbesondere gegenüber UV-A-Strahlung, erzielt wird.

Es wurde zudem überraschend gefunden, dass durch die speziellen Bestandteile der erfindungsgemäß eingesetzten Beschichtungszusammensetzung, insbesondere durch die Gegenwart des wenigstens einen gemischten Hydroxids der allgemeinen Formel (I) in der wässrigen Beschichtungszusammensetzung, Decklackschichten mittels des Coil-Coating-Verfahrens erhalten werden können, die sich nicht nur durch gute Haftungseigenschaften zu der darunterliegenden Schicht wie einer Grundierungsschicht auszeichnen, sondern sich zudem durch einen guten Glanz auszeichnen. Überraschenderweise konnte ein solcher guter Glanz bzw. eine hoher Glanzerhalt, insbesondere ein Glanzerhalt von wenigstens 80%, auch nach langanhaltendem Bestrahlen der Decklackschicht mit UV-A-Strahlung über eine ununterbrochene Dauer von 12 Wochen beobachtet werden.

Der Begriff "umfassend" im Sinne der vorliegenden Erfindung, beispielsweise in Zusammenhang mit der erfindungsgemäß in Schritt (a) eingesetzten wässrigen Beschichtungszusammensetzung, hat in einer bevorzugten Ausführungsform die Bedeutung "bestehend aus". Dabei können hinsichtlich der erfindungsgemäß eingesetzten wässrigen Beschichtungszusammensetzung in dieser bevorzugten Ausführungsform neben den Komponenten (A), Wasser und dem gemischten Hydroxid der allgemeinen Formel (I) gegebenenfalls zudem (B) und/oder (C) und/oder (D) in der erfindungsgemäß eingesetzten Beschichtungszusammensetzung enthalten sein. Alle Komponenten können jeweils in einer ihrer nachstehend genannten bevorzugten Ausführungsformen in der erfindungsgemäß eingesetzten Beschichtungszusammensetzung enthalten sein. Gleiches gilt auch für das erfindungsgemäße Verfahren und die von diesem Verfahren zwingend und optional umfassten Schritte und bevorzugte Ausführungsformen dieser Schritte: auch hier hat der Begriff "umfassend" im Sinne der vorliegenden Erfindung in einer bevorzugten Ausführungsform die Bedeutung "bestehend aus".

**Coil-Coating-Verfahren**

Mittels des erfindungsgemäßen Verfahrens ist ein zumindest einseitiges Aufbringen einer Decklackschicht auf ein Substrat möglich. Prinzipiell ist auch eine entsprechende beidseitige Beschichtung des Substrats möglich, vorzugsweise erfolgt jedoch ein einseitiges Aufbringen einer Decklackschicht auf das Substrat.

Im Schritt (a) des erfindungsgemäßen Verfahrens wird eine zumindest teilweise, vorzugsweise vollständige, Beschichtung wenigstens einer, vorzugsweise genau einer, zumindest teilweise, vorzugsweise vollständig, mit wenigstens einer, vorzugsweise genau einer, Grundierungsschicht beschichteten Metalloberfläche eines Substrats mit einer erfindungsgemäß eingesetzten wässrigen Beschichtungszusammensetzung unter Erhalt einer Decklackschicht beschichtet. Wird nur teilweise beschichtet, so erfolgt diese teilweise Beschichtung vorzugsweise auf wenigstens einem Teil der mit wenigstens einer Grundierungsschicht beschichteten Metalloberfläche des Substrats.

Vorzugsweise ist das erfindungsgemäße Verfahren ein kontinuierliches Verfahren.

Vorzugsweise wird die Decklackschicht in Schritt (a) des erfindungsgemäßen Verfahrens mit einer Trockenschichtdicke bis zu 30 $\mu$m, insbesondere bis zu 25 $\mu$m, wie beispielsweise einer Trockenschichtdicke im Bereich von 10 bis 27 $\mu$m oder 10 bis 25 $\mu$m auf eine zumindest teilweise mit wenigstens einer Grundierungsschicht gemäß nachfolgend dargestellten Schritt (3) beschichtete Metalloberfläche eines Substrats mittels der erfindungsgemäß eingesetzten wässrigen Beschichtungszusammensetzung aufgebracht. Vorzugsweise wird die erfindungsgemäß eingesetzte Beschichtungszusammensetzung als Decklackschicht in einer Trockenschichtdicke im Bereich von 10 bis 25 $\mu$m oder von 10 bis < 28 $\mu$m oder von 10 bis < 27 $\mu$m, insbesondere von 10 bis 25 $\mu$m aufgebracht. Besonders bevorzugt wird die erfindungsgemäße Beschichtungszusammensetzung als Decklackschicht in einer Trockenschichtdicke im Bereich von 10 bis 25 $\mu$m oder von 10 bis 20 $\mu$m, ganz besonders bevorzugt im Bereich von 12 bis 25 $\mu$m, insbesondere im Bereich von 15 bis 25 $\mu$m, aufgebracht. Die Bestimmung der Trockenschichtdicke erfolgt nach der nachstehend beschriebenen Methode. Üblicherweise erfolgt das Auftragen dieser Schicht im Rollenauftragsverfahren.

Als Substrat kann jedes Objekt eingesetzt werden, welches wenigstens eine metallische Oberfläche aufweist, insbesondere ein Metallband.

Unter dem Begriff "Metallband" sind im Sinne der vorliegenden Erfindung vorzugsweise nicht nur vollständig aus wenigstens einem Metall bestehende Bänder zu verstehen, sondern auch Bänder, die nur mit wenigstens einem Metall beschichtet sind, d.h. wenigstens eine metallische Oberfläche aufweisen, und selbst aus andersartigen Materialien bestehen, beispielsweise aus Polymeren oder Verbundwerkstoffen. "Bänder" im Sinne der vorliegenden Erfindung sind vorzugsweise flächenförmige Formkörper mit wenigstens einer metallischen Oberfläche, besonders bevorzugt ausgewählt aus der Gruppe bestehend aus Blechen, Folien und Platten. Der Begriff "Metall" umfasst vorzugsweise auch Legierungen. In einer bevorzugten Ausführungsform ist ein "Metallband" im Sinne der vorliegenden Erfindung vollständig aus Metallen und/oder Legierungen bestehend. Bevorzugt handelt es sich um unedle Metalle oder Legierungen, welche üblicherweise als metallische Konstruktionswerkstoffe eingesetzt werden und die vor Korrosion geschützt werden müssen.

Alle dem Fachmann bekannten üblichen Metallbänder können mittels des erfindungsgemäßen Verfahrens beschichtet werden. Vorzugsweise sind die zur Herstellung der erfindungsgemäßen Metallbänder verwendeten Metalle ausgewählt aus der Gruppe bestehend aus Eisen, Stahl, Zink, Zinklegierungen, Aluminium und Aluminiumlegierungen. Das Metall kann gegebenenfalls verzinkt sein wie z.B. verzinktes Eisen oder verzinkter Stahl wie elektrolytisch verzinkter oder heißverzinkter Stahl. Zink- oder Aluminiumlegierungen sowie deren Verwendung zum Beschichten von Stahl sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von AluminiumLegierungen umfassen insbesondere Mg, Mn, Si, Zn, Cr, Zr, Cu oder Ti. Der Begriff "Zinklegierung" soll auch Al/Zn-Legierungen einschließen, bei denen Al und Zn in annähernd gleicher Menge vorhanden sind, sowie Zn/Mg-Legierungen, in denen Mg in einer Menge von 0,1 bis 10 Gew.-%, bezogen auf das Gesamtgewicht der Legierung, vorhanden ist. Mit derartigen Legierungen beschichteter Stahl ist kommerziell erhältlich. Der Stahl selbst kann die üblichen, dem Fachmann bekannten Legierungskomponenten enthalten.

Im erfindungsgemäßen Coil-Coating-Verfahren werden vorzugsweise 0,2 bis 2 mm dicke und bis zu 2 m breite Metallbänder mit einer Geschwindigkeit von bis zu 200 m/min durch eine Coil-Coating-Anlage transportiert und dabei beschichtet.

Typische Vorrichtungen, in denen das erfindungsgemäße Verfahren durchgeführt werden kann, umfassen eine Aufgabestation, einen Bandspeicher, eine Reinigungs- und Vorbehandlungszone, in der die optionale Reinigung erfolgen und optionale Vorbehandlungsschicht aufgebracht werden kann, eine erste Lackierstation zum Aufbringen der Grundierungsschicht nebst Trocknungsofen und folgender Kühlzone, eine zweite Lackierstation zum Aufbringen der Decklackschicht mit Trocknungsofen, Kaschierstation und Kühlung sowie einen Bandspeicher und einen Aufwickler (2-Schicht-Anlage). Im Fall einer 1-Schicht-Anlage erfolgen dagegen eine optionale Reinigung sowie die Auftragung einer Vorbehandlungs-Grundierungsschicht in einer kombinierten Reinigungs-, Vorbehandlungs-, und Lackierzone nebst Trocknungsofen und nachfolgender Kühlzone. Daran schließt sich eine Lackierstation zum Aufbringen einer Decklackschicht mit Trocknungsofen, Kaschierstation und Kühlung sowie ein Bandspeicher und ein Aufwickler an.

Vorzugsweise umfasst das erfindungsgemäße Verfahren vor Durchführung des Schrittes (a) den oder die folgenden Schritt(e), vorzugsweise in der nachstehend angegebenen Reihenfolge:

(1) gegebenenfalls Reinigung der Metalloberfläche des Substrats von Verschmutzungen,

(2) gegebenenfalls zumindest teilweises Aufbringen wenigstens einer Vorbehandlungsschicht auf die gegebenenfalls gereinigte Metalloberfläche des Substrats,

(3) zumindest teilweises Aufbringen wenigstens einer Grundierungsschicht auf die gegebenenfalls einer Behandlung gemäß den Schritten (1) und/oder (2) unterworfene Metalloberfläche und gegebenenfalls Aushärten der so aufgetragenen Grundierungsschicht oder der Vorbehandlungsschicht und der Grundierungsschicht.

Die Reinigung im optionalen Schritt (1) des erfindungsgemäßen Verfahrens umfasst vorzugsweise eine Entfettung der Metalloberfläche des Substrats wie zum Beispiel des Metallbandes. Dabei können Verschmutzungen entfernt werden, die sich während der Lagerung angelagert haben oder temporäre Korrosionsschutzöle mit Hilfe von Reinigungsbädern entfernt werden.

Vorzugsweise wird die Vorbehandlungsschicht im optionalen Schritt (2) des erfindungsgemäßen Verfahrens in einer Trockenschichtdicke in einem Bereich von 1 bis 10 $\mu$m, besonders bevorzugt in einem Bereich von 1 bis 5 $\mu$m, aufgebracht.

Alternativ kann die Vorbehandlungsschicht auch eine Trockenschichtdicke < 1 $\mu$m aufweisen, z.B. im Bereich von < 1 $\mu$m bis 5 $\mu$m. Vorzugsweise erfolgt die Auftragung der Vorbehandlungsschicht im Tauch- oder Spritzverfahren oder im Rollenauftrag. Diese Schicht soll die Korrosionsbeständigkeit steigern und kann zudem der Verbesserung der Haftung nachfolgender Lackschichten an der Metalloberfläche dienen. Es sind beispielsweise Cr(VI)-haltige, Cr(III)-haltige sowie auch chromfreie wie zum Beispiel phosphathaltige Vorbehandlungsbäder bekannt.

Alternativ kann Schritt (2) auch mit einer wässrigen Vorbehandlungs-Zusammensetzung erfolgen, welche wenigstens eine wasserlösliche Verbindung, welche wenigstens ein Ti-Atom und/oder wenigstens ein Zr-Atom enthält, und wenigstens eine wasserlösliche Verbindung als Quelle für Fluorid-Ionen, welches wenigstens ein Fluor-Atom enthält, oder mit einer wässrigen Vorbehandlungs-Zusammensetzung, welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist. Vorzugsweise weisen das wenigstens eine Ti-Atom und/oder das wenigstens eine Zr-Atom dabei die Oxidationsstufe +4 auf. Vorzugsweise enthält die wässrige Vorbehandlungs-Zusammensetzung aufgrund der in ihr enthaltenen Komponenten, vorzugsweise zudem aufgrund der entsprechend gewählten Mengenanteile dieser einen Fluoro-Komplex wie beispielsweise ein Hexfluorometallat, d.h. insbesondere Hexafluorotitanat und/oder wenigstens ein Hexafluorozirkonat. Vorzugsweise weist die Vorbehandlungs-Zusammensetzung eine Gesamtkonzentration an den Elementen Ti und/oder Zr auf, die $2{,}5 \cdot 10^{-4}$ mol/L nicht unterschreitet, aber nicht grösser als $2{,}0 \cdot 10^{-2}$ mol/L ist. Die Herstellung solcher Vorbehandlungs-Zusammensetzungen und ihr Einsatz in der Vorbehandlung ist beispielsweise aus WO 2009/115504 A1 bekannt. Vorzugsweise enthält die Vorbehandlungs-Zusammensetzung zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise ein wenigstens Alumosilikat und hierbei insbesondere ein solches, das ein atomares Verhältnis von Al zu Si-Atomen von zumindest 1:3 aufweist. Die Herstellung solcher Vorbehandlungs-Zusammensetzungen und ihr Einsatz in der Vorbehandlung ist ebenfalls aus WO 2009/115504 A1 bekannt. Die Alumosilikate liegen vorzugsweise als Nanopartikel mit einer durch dynamische Lichtstreuung bestimmbaren mittleren Teilchengröße im Bereich von 1 bis 100 nm. Die durch dynamische Lichtstreuung bestimmbare mittlere Teilchengröße solcher Nanopartikel im Bereich von 1 bis 100 nm wird dabei gemäß DIN ISO 13321 (Datum: 1.10.2004) bestimmt. Vorzugsweise weist die Metalloberfläche nach Schritt (2) eine Vorbehandlungsschicht auf. Alternativ kann Schritt (2) auch mit einer wässrigen Sol-Gel-Zusammensetzung erfolgen.

Vorzugsweise wird die Grundierungsschicht, d.h. eine Primerschicht, im Schritt (3) des erfindungsgemäßen Verfahrens in einer Trockenschichtdicke in einem Bereich von 5 bis 45 $\mu$m, besonders bevorzugt in einem Bereich von 2 bis 35 $\mu$m, insbesondere in einem Bereich von 2 bis 25 $\mu$m aufgebracht. Üblicherweise erfolgt das Auftragen dieser Schicht im Rollenauftragsverfahren. Solche Primerschichten sind zum Beispiel aus WO 2006/079628 A1 bekannt.

Vorzugsweise umfasst das erfindungsgemäße Verfahren nach Durchführung des Schrittes (a) zudem den Schritt (b), nämlich

(b) Aushärten der aufgetragenen Decklackschicht.

Die Aushärtung im Schritt (b) erfolgt vorzugsweise bei Temperaturen oberhalb der Raumtemperatur, d.h. oberhalb von 18-23°C, besonders bevorzugt bei Temperaturen $\geq$ 80°C, noch bevorzugter $\geq$ 110°C, ganz besonders bevorzugt $\geq$ 140°C und insbesondere bevorzugt $\geq$ 170°C. Besonders vorteilhaft ist das Aushärten bei 100 bis 350°C, noch bevorzugter bei 150 bis 350°C und besonders bevorzugt bei 200 bis 300°C. Die Aushärtung erfolgt vorzugsweise über eine Dauer von 10 s bis 240 s, besonders bevorzugt von 20 s bis 180 s, ganz besonders bevorzugt 25 s bis 150 s.

Vorzugsweise erfolgt Schritt (b) bei einer Substrattemperatur im Bereich von $\geq$ 170°C bis 350 °C über eine Dauer von 20 s bis 180 s.

**In Schritt (a) eingesetzte wässrige Beschichtungszusammensetzung**

Vorzugsweise addieren sich die Anteile in Gew.-% aller der in der erfindungsgemäß eingesetzten Beschichtungszusammensetzung enthaltenen Komponenten wie (A), Wasser und dem gemischten Hydroxid der allgemeinen Formel (I) sowie gegebenenfalls zudem (B) und/oder (C) und/oder (D) auf 100 Gew.-%, bezogen auf das Gesamtgewicht der Beschichtungszusammensetzung.

Die erfindungsgemäß in Schritt (a) eingesetzte Beschichtungszusammensetzung enthält als flüssiges Verdünnungsmittel Wasser, d.h. ist wässrig.

Unter dem Begriff "wässrig" im Zusammenhang mit der erfindungsgemäß eingesetzten Beschichtungszusammensetzung werden vorzugsweise solche Beschichtungszusammensetzungen verstanden, die - als flüssiges Verdünnungsmittel, d.h. als flüssiges Lösemittel und/oder Dispergiermittel - Wasser als Hauptkomponente enthalten und somit zumindest im Wesentlichen frei von organischen Lösemitteln sind. Gegebenenfalls können die erfindungsgemäß eingesetzten Beschichtungszusammensetzungen jedoch wenigstens ein organisches Lösemittel in geringen Anteilen enthalten. Als Beispiele für solche organischen Lösemittel seien heterocyclische, aliphatische oder aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon (MEK), Methylisobutylketon (MIBK), Aceton, Isophoron oder Mischungen davon genannt, insbesondere Methylethylketon (MEK) und/oder Methylisobutylketon (MIBK). Vorzugsweise beträgt der Anteil dieser organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-%, jeweils bezogen auf den Gesamtanteil der in der erfindungsgemäß eingesetzten Beschichtungszusammensetzung enthaltenen flüssigen Verdünnungsmitteln, d.h. flüssigen Lösemitteln und/oder Dispergiermitteln. Insbesondere liegen jedoch keine organischen Lösemittel in der erfindungsgemäß eingesetzten Beschichtungszusammensetzung vor, d.h. die erfindungsgemäß eingesetzte Beschichtungszusammensetzung enthält Wasser als einziges Verdünnungsmittel.

Vorzugsweise weist die erfindungsgemäß in Schritt (a) eingesetzte Beschichtungszusammensetzung einen nicht-flüchtigen Anteil im Bereich von 5 bis 80 Gew.-% oder im Bereich von 10 bis 60 Gew.-%, besonders bevorzugt im Bereich von 15 bis 55 Gew.-%, ganz besonders bevorzugt im Bereich von 20 bis 50 Gew.-%,, bezogen auf das Gesamtgewicht der Beschichtungszusammensetzung auf. Die Bestimmung des nicht-flüchtigen Anteils erfolgt dabei gemäß der nachstehend beschriebenen Methode.

Die erfindungsgemäß eingesetzte wässrige Beschichtungszusammensetzung wird unter Verwendung üblicher Verfahren hergestellt, insbesondere durch einfaches Vermischen der jeweiligen zu ihrer Herstellung eingesetzten Komponenten, beispielweise mittels Schnellrührer, Rührkessel, Rührwerksmühlen, Dissolver, Kneter, oder In-Line-Dissolvern.

### Gemischtes Hydroxid der allgemeinen Formel (I)

Die im Schritt (a) des erfindungsgemäßen Verfahrens eingesetzte wässrige Beschichtungszusammensetzung enthält wenigstens ein gemischtes Hydroxid der nachstehenden allgemeinen Formel (I)

$$\{[(M^{2+}_{(1-x)})(M^{3+}_{(x)})(OH)_2][A^{y-}_{(x/y)}]\}\cdot(H_2O)_n \qquad (I),$$

worin

$M^{2+}$     für zweiwertige metallische Kationen,
$M^{3+}$     für dreiwertige metallische Kationen,
$A^{y-}$     für Anionen mit einer mittleren Wertigkeit y,
x     für einen Wert im Bereich von 0,05 bis 0,50 und
n     für einen Wert im Bereich von 0 bis 10 steht,

worin die Anionen $A^{y-}$ ausgewählt aus der Gruppe bestehend aus $CO_3^{2-}$, $HCO_3^-$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^-$, $SO_3^{2-}$, $HSO_3^-$, $NO_3^-$ und $OH^-$ sind.

Die erfindungsgemäß eingesetzten gemischten Hydroxide der allgemeinen Formel (I) sind dem Fachmann beispielsweise unter dem Begriff "schichtförmige Doppelhydroxide" (LDH = layered double hydroxides) bekannt. Die erfindungsgemäß eingesetzten gemischten Hydroxide der allgemeinen Formel (I) kommen natürlich vor, können aber auch synthetisch oder halbsynthetisch hergestellt werden. Die erfindungsgemäß eingesetzten gemischten Hydroxide der allgemeinen Formel (I) haben üblicherweise eine schichtförmige Struktur ähnlich dem Brucit ($Mg(OH)_2$), wobei jeweils zwischen zwei positiv geladenen Metallhydroxidschichten (beispielsweise ausgebildet durch jeweils zweiwertige Kationen $M^{2+}$ und durch jeweils dreiwertige Kationen $M^{3+}$) eine negativ geladene Schicht von interkalierten Anionen liegt, welche zusätzlich Wasser wie Kristallwasser enthalten kann. Es handelt sich also üblicherweise um alternierend positiv und negativ geladene Schichten, die durch entsprechende ionische Wechselwirkungen eine Schichtstruktur ausbilden. Vorzugsweise befinden sich die zwei- und dreiwertigen metallischen Kationen sowie Hydroxidionen in regelmäßiger Anordnung kantenverknüpfter Oktaeder in den positiv geladenen Metallhydroxidschichten sowie die interkalierten Anionen $A^{y-}$ in den jeweiligen negativ geladenen Zwischenschichten, wobei zusätzlich Wasser wie Kristallwasser enthalten sein kann. Erfindungsgemäß eingesetzte gemischte Hydroxide der allgemeinen Formel (I) sind dem Fachmann beispielsweise aus WO 2009/062621 A1, WO 2010/130308 A1 und WO 2013/056846 A1 sowie aus WO 2010/066642 A1 bekannt.

Unter der mittleren Wertigkeit im Zusammenhang mit den Anionen $A^{y-}$ ist im Rahmen der vorliegenden Erfindung vorzugsweise der Mittelwert der Wertigkeiten der gegebenenfalls unterschiedlichen vorhandenen Anionen $A^{y-}$ zu verstehen. Wie dem Fachmann ersichtlich ist, können unterschiedliche Anionen, die in ihrer Wertigkeit unterschiedlich sind wie beispielsweise $CO_3^{2-}$ als Beispiel eines zweiwertigen Anions mit y = 2 und $HSO_4^-$ als Beispiel eines einwertigen Anions mit y = 1 je nach ihrem jeweiligen Anteil an der Gesamtmenge von Anionen $A^{y-}$ (Gewichtungsfaktor) zu einer jeweils individuellen mittleren Wertigkeit beitragen. Als Anionen kommen sowohl organische als auch anorganische Anionen in Frage. Vorzugsweise enthält das erfindungsgemäß eingesetzte gemischte Hydroxid der allgemeinen Formel (I) nur eine Art von Anionen $A^{y-}$, vorzugsweise Carbonat-Anionen ($CO_3^{2-}$).

Vorzugsweise liegt die mittlere Wertigkeit y der Anionen $A^{y-}$ im Bereich von 1 bis 3, besonders bevorzugt im Bereich von 1 bis 2.

Erfindungsgemäß sind die Anionen $A^{y-}$ ausgewählt aus der Gruppe bestehend aus $CO_3^{2-}$, $HCO_3^-$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^-$, $SO_3^{2-}$, $HSO_3^-$, $NO_3^-$ und $OH^-$. Besonders bevorzugt sind die Anionen $A^{y-}$ ausgewählt aus der Gruppe bestehend aus $CO_3^{2-}$, $Cl^-$, $Br^-$, $BO_3^{3-}$, $PO_4^{3-}$, $SO_4^{2-}$, $HSO_4^-$, $SO_3^{2-}$, $NO_3^-$ und $OH^-$. Ganz besonders bevorzugt sind die Anionen $A^{y-}$ ausgewählt aus der Gruppe bestehend aus $CO_3^{2-}$ und Mischungen aus $CO_3^{2-}$ und wenigstens einem weiteren Anion ausgewählt aus der Gruppe bestehend aus $HCO_3^-$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^-$, $SO_3^{2-}$, $HSO_3^-$, $NO_3^-$ und $OH^-$ oder wenigstens einem weiteren Anion ausgewählt aus der Gruppe bestehend aus $Cl^-$, $Br^-$, $BO_3^{3-}$, $PO_4^{3-}$, $SO_4^{2-}$, $HSO_4^-$, $SO_3^{2-}$, $NO_3^-$ und $OH^-$.

Vorzugsweise steht der Parameter x für einen Wert im Bereich von 0,15 bis 0,40, besonders bevorzugt für einen Wert im Bereich von 0,25 bis 0,35.

Vorzugsweise sind die zweiwertigen metallischen Kationen $M^{2+}$ ausgewählt aus der Gruppe bestehend aus $Zn^{2+}$, $Mg^{2+}$, $Ca^{2+}$, $Ba^{2+}$, $Cu^{2+}$, $Ni^{2+}$, $Co^{2+}$, $Fe^{2+}$, $Mn^{2+}$, $Cd^{2+}$, $Sn^{2+}$, $Pb^{2+}$ und $Sr^{2+}$ sowie Mischungen davon, besonders bevorzugt ausgewählt aus der Gruppe bestehend aus $Zn^{2+}$, $Mg^{2+}$, $Ca^{2+}$, $Ba^{2+}$, $Cu^{2+}$, $Co^{2+}$, $Fe^{2+}$ und $Mn^{2+}$ sowie Mischungen davon, insbesondere ausgewählt saus der Gruppe bestehend aus $Zn^{2+}$ und/oder $Mg^{2+}$.

Vorzugsweise sind die dreiwertigen metallischen Kationen $M^{3+}$ ausgewählt aus der Gruppe bestehend aus $Al^{3+}$, $Bi^{3+}$, $Fe^{3+}$, $Ce^{3+}$, $Cr^{3+}$, $Ga^{3+}$, $Ni^{3+}$, $Co^{3+}$, $Mn^{3+}$, $V^{3+}$, $Ce^{3+}$, und $La^{3+}$ sowie Mischungen davon, besonders bevorzugt ausgewählt aus der Gruppe bestehend aus $Al^{3+}$, $Bi^{3+}$, $Fe^{3+}$, $Co^{3+}$, $Mn^{3+}$, $Ce^{3+}$ und $La^{3+}$ sowie Mischungen davon, insbesondere stehen diese für $Al^{3+}$.

Vorzugsweise sind die zweiwertigen metallischen Kationen $M^{2+}$ ausgewählt sind aus der Gruppe bestehend aus $Zn^{2+}$, $Mg^{2+}$, $Ca^{2+}$, $Ba^{2+}$, $Cu^{2+}$, $Ni^{2+}$, $Co^{2+}$, $Fe^{2+}$, $Mn^{2+}$, $Cd^{2+}$, $Sn^{2+}$, $Pb^{2+}$ und $Sr^{2+}$ sowie Mischungen davon, besonders bevorzugt ausgewählt aus der Gruppe bestehend aus $Zn^{2+}$, $Mg^{2+}$, $Ca^{2+}$, $Ba^{2+}$, $Cu^{2+}$, $Co^{2+}$, $Fe^{2+}$ und $Mn^{2+}$ sowie Mischungen davon, insbesondere ausgewählt sind aus der Gruppe bestehend aus $Zn^{2+}$ und/oder $Mg^{2+}$, und die dreiwertigen metallischen Kationen $M^{3+}$ sind ausgewählt aus der Gruppe bestehend aus $Al^{3+}$, $Bi^{3+}$, $Fe^{3+}$, $Ce^{3+}$, $Cr^{3+}$, $Ga^{3+}$, $Ni^{3+}$, $Co^{3+}$, $Mn^{3+}$, $V^{3+}$, und $La^{3+}$ sowie Mischungen davon, besonders bevorzugt ausgewählt aus der Gruppe bestehend aus $Al^{3+}$, $Bi^{3+}$, $Fe^{3+}$, $Co^{3+}$, $Mn^{3+}$, $Ce^{3+}$ und $La^{3+}$, insbesondere stehen diese für $Al^{3+}$.

Vorzugsweise handelt es sich bei den erfindungsgemäß eingesetzten gemischten Hydroxiden der allgemeinen Formel (I) um sogenannte Hydrotalcite: Bei den Hydrotalciten ist vorzugsweise als wenigstens ein zweiwertiges Kation $Mg^{2+}$, als wenigstens ein dreiwertiges Kation $Al^{3+}$ und als wenigstens ein Anion $A^{y-}$ $CO_3^{2-}$ vorhanden.

Grundsätzlich kann die Herstellung der gemischten Hydroxide der allgemeinen Formel (I) aus Mischungen von anorganischen Salzen der metallischen Kationen unter Einhaltung der erforderlichen und/oder gewünschten Verhältnisse (Stöchiometrien) von zweiwertigen und dreiwertigen metallischen Kationen in wässriger Phase bei definierten, konstant gehaltenen basischen pH-Werten erfolgen. Erfolgt die Synthese in Gegenwart von Kohlendioxid, beispielsweise unter atmosphärischen Bedingungen und/oder durch Zugabe von Carbonaten, enthalten die gemischten Hydroxide der allgemeinen Formel (I) in der Regel Carbonat als interkaliertes Anion. Grund hierfür ist, dass das Carbonat eine hohe Affinität zur Einlagerung in die Schichtstruktur der gemischten Hydroxide der allgemeinen Formel (I) aufweist. Diese Methode wird besonders bevorzugt zur Herstellung der gemischten Hydroxide der allgemeinen Formel (I) eingesetzt.

Sofern unter wenigstens teilweisem Ausschluss von Kohlendioxid und Carbonaten (beispielsweise Stickstoff oder Argon-Schutzgasatmosphäre, nicht carbonathaltige Salze) gearbeitet wird, enthalten die gemischten Hydroxide der allgemeinen Formel (I) zumindest teilweise die anorganischen Anionen der eingesetzten Metallsalze, beispielsweise Chloridionen, als interkalierte Anionen. Die Synthese kann auch unter vollständig unter Ausschluss von Kohlendioxid (Schutzgasatmosphäre) beziehungsweise Carbonat und in Anwesenheit von beispielsweise organischen Anionen oder deren saurer Vorstufen, welche nicht als Anion in den Metallsalzen vorhanden sind, durchgeführt werden. Dabei erhält man in der Regel ein solches gemischtes Hydroxid der allgemeinen Formel (I), welches die entsprechenden organischen Anionen interkaliert hat. Durch die oben genannte Methode, die so genannte direkte Kopräzipitationsmethode (direct co-precipitation method oder Templatmethode), erhält man also in einer Ein-Schritt-Synthese die gewünschten gemischten Hydroxide der allgemeinen Formel (I).

Eine alternative Syntheseroute zur Herstellung der gemischten Hydroxide besteht in der Hydrolyse von Metallalkoholaten in Gegenwart der gewünschten, einzulagernden Anionen (US-A- 6,514,473). Zudem kann zur Herstellung der gemischten Hydroxide der allgemeinen Formel (I) die sogenannte anionische Austauschreaktionsmethode (anionic exchange reaction method) eingesetzt. Hierbei wird die Eigenschaft der gemischten Hydroxide der allgemeinen Formel (I), interkalierte Anionen austauschen zu können, ausgenutzt. Die Schichtstruktur der kationischen gemischten Metallhydroxidschichten der gemischten Hydroxide der allgemeinen Formel (I) bleibt dabei erhalten. Zunächst werden bereits hergestellte gemischte Hydroxide der allgemeinen Formel (I), in wässriger alkalischer Lösung beispielsweise unter Schutzgasatmosphäre suspendiert. Anschließend wird diese Suspension oder Aufschlämmung beispielsweise unter Schutzgasatmosphäre zu einer wässrigen alkalischen Lösung der zu interkalierenden weiteren Anionen gegeben und für eine gewisse Zeit, beispielsweise 1 Stunde bis 10 Tage, insbesondere 1 bis 5 Tage, gerührt. Die gemischten Hydroxide der allgemeinen Formel (I) werden dann wiederum nach Zentrifugation und mehrfacher Waschung mit Wasser in Form einer Aufschlämmung erhalten.

Vorzugsweise weist das wenigstens eine gemischte Hydroxid der allgemeinen Formel (I) einen mittleren Teilchendurchmesser im Bereich von 0,1 bis 10 $\mu$m, besonders bevorzugt im Bereich von 0,1 bis 7,5 $\mu$m, ganz besonders bevorzugt im Bereich von 0,1 bis 5 $\mu$m, insbesondere in Bereich von 0,1 bis <1 $\mu$m auf. Der mittlere Teilchendurchmesser wird gemäß der nachstehend angegebenen Methode bestimmt.

Vorzugsweise ist das wenigstens eine gemischte Hydroxid der allgemeinen Formel (I) in der erfindungsgemäß eingesetzten wässrigen Beschichtungszusammensetzung in einer Menge in einem Bereich von 0,5 bis 25,0 Gew.-%, besonders bevorzugt in einem Bereich von 0,75 bis 20,0 Gew.-%, ganz besonders bevorzugt in einem Bereich von 1,0 bis 15,0 Gew.-%, insbesondere in einem Bereich von 1,5 bis 10 Gew.-%, am meisten bevorzugt in einem Bereich von 2,0 bis 8 Gew.-%, jeweils bezogen auf das Gesamtgewicht der Beschichtungszusammensetzung, enthalten.

Erfindungsgemäß eingesetzte gemischte Hydroxide der allgemeinen Formel (I) sind kommerziell erhältlich, beispielsweise von der Firma Kisuma Chemicals, Japan.

**Polymer (A)**

Die erfindungsgemäß in Schritt (a) eingesetzte Beschichtungszusammensetzung enthält wenigstens ein darin lösbares oder dispergierbares Polymer (A). Das Polymer (A) stellt ein polymeres Harz dar. Das Polymer (A) stellt - in Kombination mit dem gegebenenfalls ebenfalls vorhandenen Vernetzungsmittel (B) - zumindest einen Teil des in der Beschichtungszusammensetzung enthaltenen Bindemittels dar. Unter dem Begriff "Bindemittel" werden im Sinne der vorliegenden Erfindung in Einklang mit der DIN EN ISO 4618 (deutsche Fassung, Datum: März 2007) vorzugsweise die vorzugsweise für die Filmbildung verantwortlichen nicht-flüchtigen Anteile einer Beschichtungszusammensetzung wie der erfindungsgemäß eingesetzten Beschichtungszusammensetzung verstanden. Darin enthaltene Pigmente und/oder Füllstoffe wie die optionale Komponente (C) werden somit nicht unter den Begriff des Bindemittels subsumiert. Der nicht-flüchtige Anteil kann gemäß der nachstehend beschriebenen Methode bestimmt werden.

Vorzugsweise weist das Polymer (A) reaktive funktionelle Gruppen auf, die eine Vernetzungsreaktion ermöglichen. Jede übliche dem Fachmann bekannte vernetzbare reaktive funktionelle Gruppe kommt dabei als vernetzbare reaktive funktionelle Gruppe in Betracht. Vorzugsweise weist das Polymer (A) reaktive vernetzbare funktionelle Gruppen ausgewählt aus der Gruppe bestehend aus primären Amino-Gruppen, sekundären Amino-Gruppen, Hydroxyl-Gruppen, Thiol-Gruppen, Carboxyl-Gruppen, Epoxid-Gruppen, und Gruppen, welche wenigstens eine C=C-Doppelbindung aufweisen wie beispielsweise Gruppen, welche wenigstens eine ethylenisch ungesättige Doppelbindung aufweisen wie Vinyl-Gruppen und/oder (Meth)acrylat-Gruppen. Insbesondere weist das erfindungsgemäß eingesetzte Polymer (A) vernetzbare Hydroxyl-Gruppen und/oder vernetzbare Carboxyl-Gruppen, am meisten bevorzugt vernetzbare Hydroxyl-Gruppen auf. Das Polymer (A) kann dabei selbst-vernetzend oder fremd-vernetzend, vorzugsweise fremd-vernetzend sein. Um eine Fremd-Vernetzungsreaktion zu ermöglichen, enthält die erfindungsgemäße Beschichtungszusammensetzung neben dem Polymer (A) vorzugsweise wenigstens ein Vernetzungsmittel (B). Vorzugsweise weist das Polymer (A) einen Anteil an vernetzbaren reaktiven funktionellen Gruppen, insbesondere Hydroxyl-Gruppen im Bereich von 0,25 Gew.-% bis 4,5 Gew.-%, besonders bevorzugt von 0,5 bis 4,0 Gew.-%, ganz besonders bevorzugt von 0,75 bis 3,5 Gew.-%, insbesondere von 1,0 bis 3,0 Gew.-%, jeweils bezogen auf das Gesamtgewicht des Festkörper-Anteils des Polymers (A) auf.

Das in der erfindungsgemäß eingesetzten wässrigen Beschichtungszusammensetzung enthaltene Polymer (A) ist vorzugsweise thermisch vernetzbar. Vorzugsweise ist das Polymer (A) beim Erwärmen auf eine Substrattemperatur oberhalb von Raumtemperatur, d.h. bei einer Substrattemperatur von 18-23°C vernetzbar. Vorzugsweise ist das Bindemittel (A) erst bei Substrattemperaturen $\geq$ 80°C, bevorzugter $\geq$ 110°C, besonders bevorzugt $\geq$ 130°C und ganz besonders bevorzugt ≥ 140°C vernetzbar. Besonders vorteilhaft ist das Polymer (A) bei einer Substrattemperatur im Bereich von 100 bis 350°C, noch bevorzugter bei 125 bis 350°C, besonders bevorzugt bei 150 bis 275°C vernetzbar, ganz besonders bevorzugt bei 175 bis 275°C, insbesondere bevorzugt bei 200 bis 275°C, am meisten bevorzugt bei 225 bis 275°C vernetzbar.

Vorzugsweise kann als Polymer (A) wenigstens ein Polymer ausgewählt aus der Gruppe bestehend aus Polyurethanen, Polyestern, Polyamiden, Polyharnstoffen, Polystyrolen, Polycarbonaten, Poly(meth)acrylaten, Epoxidharzen, Phenol-Formaldehydharzen, Phenolharzen und Silikonharzen sowie Mischungen davon, eingesetzt werden, wobei vorzugsweise 70 bis 100 Gew.-% des in der Beschichtungszusammensetzung enthaltenen Polymeren (A) aus wenigstens einem der vorstehend genannten Polymeren ausgewählt sind. Dabei werden unter den genannten Polymeren vorzugsweise jeweils sowohl Homo- als auch Copolymere verstanden.

Vorzugsweise weist das Polymer (A) ein gewichtsmittleres Molekulargewicht von 2 000 bis 200 000 g/mol, besonders bevorzugt von 5 000 bis 150 000 g/mol, ganz besonders bevorzugt von 6 000 bis 100 000 g/mol, insbesondere von 7 000 bis 80 000 g/mol oder von 10 000 bis 60 000 g/mol oder von 12 000 bis 40 000 g/mol oder von 12 000 bis 30 000 g/mol auf. Die Bestimmungsmethode zur Ermittlung des gewichtsmittleren Molekulargewichts ist nachstehend beschrieben.

Vorzugsweise weist das Polymer (A) ein zahlenmittleres Molekulargewicht von 100 bis 10 000 g/mol, besonders bevorzugt von 200 bis 5 000 g/mol, ganz besonders bevorzugt von 250 bis 2 500 g/mol, insbesondere von 300 bis 1 000 g/mol auf. Die Bestimmungsmethode zur Ermittlung des zahlenmittleren Molekulargewichts ist nachstehend beschrieben.

Vorzugsweise weist das Bindemittel (A) eine Säure-Zahl im Bereich von 2 bis 50, besonders bevorzugt von 3 bis 45, ganz besonders bevorzugt von 4 bis 40, insbesondere bevorzugt von 5 bis 35 oder von 5 bis 30 oder von 5 bis 20 mg KOH pro g Bindemittel (A) auf. Die Bestimmungsmethode zur Ermittlung der Säure-Zahl ist nachstehend beschrieben.

Vorzugsweise wird als Polymer (A) wenigstens ein Polymer eingesetzt, welches OH-Gruppen aufweist und auf wenigstens einem Polyurethan und/oder wenigstens einem Polyester basiert.

Die Herstellung von auf Polyurethan basierenden Polymeren wie Polyurethanen durch eine Polyadditionsreaktion-Reaktion wenigstens eines Polyisocyanats wie beispielsweise eines Diisocyanats mit wenigstens einem Polyol wie zum Beispiel einem Diol ist dem Fachmann bekannt. Als Polyol-Komponente zur Herstellung von auf Polyurethan basierenden Polymeren (A) werden vorzugsweise Polyester-Polyole, Polycarbonat-Polyole, Polydimethylsiloxan-Polyole und/oder Polyether-Polyole eingesetzt. Besonders bevorzugt sind Polyester-Polyole.

Als Polyisocyanate wie beispielsweise Diisocyanate können die gleichen Komponenten eingesetzt werden, die auch als Vernetzungsmittel (B) eingesetzt werden können.

Vorzugsweise ist das erfindungsgemäß eingesetzte Polymer (A) daher ein Polyester-Polyurethanharz. Zur Herstellung des Polymeren (A) wird somit vorzugsweise ein Polyester-Polyol als Präpolymer-Polyol-Komponente eingesetzt. Als Polyester-Polyole eignen sich insbesondere solche Verbindungen, die sich von wenigstens einem Polyol wie wenigstens einem Diol, beispielsweise Ethylenglykol, Propylenglykol (1,2-Propandiol), Trimethylenglykol (1,3-Propandiol), Neopentylgylkol, 1,4-Butandiol und/oder 1,6-Hexandiol, oder wie wenigstens einem Triol wie 1,1,1-Trimethylolpropan (TMP), und wenigstens einer Dicarbonsäure wie beispielsweise Adipinsäure, Terephthalsäure, Isophthalsäure, ortho-Phthalsäure und/oder Dimethylolpropionsäure und/oder wenigstens einem Dicarbonsäurederivat wie einem Dicarbonsäureester und/oder einem Dicarbonsäureanhydrid wie Phthalsäureanhydrid, ableiten. Insbesondere bevorzugt ist ein solches als Präpolymer-Polyol-Komponente eingesetztes Polyester-Polyol, welches sich von wenigstens einem Diol und/oder Triol ausgewählt aus der Gruppe bestehend aus 1,6-Hexandiol, Neopentylglycol, Trimethylolpropan und Mischungen davon, und wenigstens einer Dicarbonsäure (oder wenigstens einem Dicarbonsäurederivat davon) ausgewählt aus der Gruppe bestehend aus Adipinsäure, Terephthalsäure, Isophthalsäure, ortho-Phthalsäure Dimethylolpropionsäure und Mischungen davon, ableitet. Vorzugsweise wird wenigstens ein solches Polyester-Polyol mit wenigstens einem Polyisocyanat, insbesondere mit HDI wie trimerisiertem HDI zur Herstellung des Polyurethan-Harzes eingesetzt, auf dem das Polymer (A) basiert.

Um eine Lösung bzw. Dispersion eines solchen Polyurethan-Harzes zu ermöglichen, werden üblicherweise zur Stabilisierung der Dispersion in die Polyurethan-Kette ionische und/oder hydrophile Segmente eingebaut. Als Weichsegmente können bevorzugt 20 bis 100 mol % an höhermolekularen oder niedermolekularen Diolen wie beispielsweise Dimethylolpropionsäure, bezogen auf die Menge aller Polyole, bevorzugt Polyester-Polyole, mit einem zahlenmittleren Molekulargewicht $M_n$ von 500 bis 5000 g/mol, bevorzugt von 1000 bis 3000 g/mol eingesetzt werden. Dabei wird zunächst ein Präpolymer aus wenigstens einem Polyol wie wenigstens einem Polyester-Polyol und wenigstens einem Polyisocyanat wie wenigstens einem Diisocyanat, insbesondere HDI, hergestellt, welches - durch Überschuss an eingesetztem Polyisocyanat - als endständige reaktive Gruppen Isocyanat-Gruppen aufweist auf. Im zweiten Schritt werden diese Präpolymere über höhermolekulare oder niedermolekulare Diolen als Kettenverlängerer wie beispielsweise Dimethylolpropionsäure miteinander zu langkettigen Molekülen verbunden, gegebenenfalls in Gegenwart von Wasser. Über solche Kettenverlängerer lassen sich ionische Gruppen in das Polymer einbauen, um dieses als in Wasser dispergiertes Teilchen zu stabilisieren. Wird beispielsweise Dimethylolpropionsäure als Kettenverlängerer eingesetzt, so kann eine Carboxyl-Funktionalität in das Polymer eingebaut werden, welche deprotoniert werden kann und somit anionische Segmente innerhalb des Polymeren generiert werden können. Alternativ kann zunächst eine als Kettenverlängerer eingesetzte Komponente wie Dimethylolpropionsäure mit wenigstens einem Polyisocyanat wie wenigstens einem Diisocyanat, insbesondere HDI wie trimierisiertem HDI, umgesetzt werden, wobeidurch Überschuss an eingesetztem Polyisocyanat - ein Umsetzungsprodukt erhalten wird, welches als endständige reaktive Gruppen Isocyanat-Gruppen aufweist. Diese Isocyanat-Gruppen des so erhaltenen Umsetzungsprodukts können dann im Anschluss mit wenigstens einem vorstehend genannten Präpolymer aus wenigstens einem Polyol wie wenigstens einem Polyester-Polyol umgesetzt werden, um ein entsprechendes Polyurethan zu erhalten.

Geeignete Polyurethane wie zum Beispiel Bayhydrol® U 2841 XP der Firma Bayer, die als Polymere (A) eingesetzt werden können, sind kommerziell erhältlich.

Die erfindungsgemäß eingesetzte Beschichtungszusammensetzung kann gegebenenfalls zwei voneinander verschiedene Polymere (A) enthalten. Wird als Polymer (A) beispielsweise wenigstens ein Polymer eingesetzt, welches OH-Gruppen aufweist und auf wenigstens einem Polyurethan und/oder wenigstens einem Polyester basiert, so kann in der erfindungsgemäß eingesetzten Beschichtungszusammensetzung zudem ein weiteres davon verschiedenes Polymer (A) enthalten sein. Vorzugsweise ist dieses weitere Polymer (A) wenigstens ein Copolymer, welches durch Copolymerisation von ethylenisch ungesättigten Monomeren in Gegenwart wenigstens eines polymerisierbare KohlenstoffDoppelbindungen aufweisenden Polyurethan-Harzes erhältlich ist. Solche als weiteres Polymer (A) einsetzbare Copolymere sind beispielsweise aus WO 91/15528 A1 bekannt und können daher vom Fachmann ohne weiteres hergestellt werden.

## Optional vorhandenes Vernetzungsmittel (B)

Das optional in der erfindungsgemäß in Schritt (a) eingesetzten Beschichtungszusammensetzung vorhandene Vernetzungsmittel (B) ist von der Komponente (A) verschieden.

Vorzugsweise enthält die Beschichtungszusammensetzung wenigstens ein Vernetzungsmittel (B).

Das Vernetzungsmittel (B) ist vorzugsweise zur thermischen Vernetzung bzw. Aushärtung geeignet. Solche Vernetzungsmittel sind dem Fachmann bekannt. Zur Beschleunigung der Vernetzung können der wässrigen Beschichtungszusammensetzung geeignete Katalysatoren zugesetzt werden.

Alle dem Fachmann bekannten üblichen Vernetzungsmittel (B) können eingesetzt werden. Beispiele geeigneter Vernetzungsmittel sind Melamin-Harze, Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, $\beta$-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten. Werden blockierte Polyisocyanate als Vernetzungsmittel gewählt, wird die erfindungsgemäß eingesetzte wässrige Beschichtungszusammensetzung als 1-Komponenten-Zusammensetzung (1-K) formuliert. Werden unblockierte Polyisocyanate als Vernetzungsmittel gewählt, wird die wässrige Beschichtungszusammensetzung als 2-Komponenten-Zusammensetzung (2-K) formuliert.

Ein besonders bevorzugtes Vernetzungsmittel (B) ist ausgewählt aus der Gruppe bestehend aus blockierten und unblockierten Polyisocyanaten und Melamin-Harzen wie Melamin-Formaldehyd-Kondensationsprodukten, insbesondere veretherte (alkylierte) Melamin-Formaldehyd-Kondensationsprodukte, sowie Mischungen davon.

Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber reaktiven funktionellen Gruppen wie beispielsweise Hydroxyl-Gruppen bei Raumtemperatur, d.h. bei einer Temperatur von 18 bis 23°C beständig ist, bei erhöhten Temperaturen, beispielsweise bei $\geq$ 80°C bevorzugter $\geq$ 110°C, besonders bevorzugt $\geq$ 130°C und ganz besonders bevorzugt $\geq$ 140°C oder bei 90°C bis 300°C oder bei 100 bis 250°C, noch bevorzugter bei 125 bis 250°C und besonders bevorzugt bei 150 bis 250°C, aber reagiert. Bei der Herstellung der blockierten Polyisocyanate können beliebige für die Vernetzung geeignete organische Polyisocyanate verwendet werden. Als Polyisocyanate wie beispielsweise als Diisocyanate werden bevorzugt (hetero)aliphatische, (hetero)cycloaliphatische, (hetero)aromatische oder (hetero)aliphatisch-(hetero)aromatische Diisocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Tri-methyl-1,6-hexamethylendiisocyanat (TMDI), 1,3-Bis(1-isocyanato-1-methylethyl)benzol, Diphenylmethandiisocyanat (MDI), 1,9-Diisocyanato-5-methylnonan, 1,8-Diisocyanato-2,4-dimethyloctan, 1,12-Dodecandiisocyanat, $\omega,\omega'$-Diisocyanatodipropylether, Cyclobuten-1,3-diisocyanat, Cyclohexan-1,3- und -1,4-diisocyanat, 3-Isocyanatomethyl-3,5,5-trimethylcyclohexylisocyanat (Isophorondiisocyanat, IPDI), 1,4-Diisocyanatomethyl-2,3,5,6-tetramethylcyclohexan, Decahydro-8-methyl-(1,4-methano-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H$_{12}$MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, Naphthylendiisocyanat, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Ganz besonders bevorzugt sind 2,4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI) und/oder 1,6-Hexamethylendiisocyanat (HDI), vorzugsweise jeweils in trimerisierter Form. Insbesondere bevorzugt ist trimerisiertes HDI.

Ebenfalls als geeignete Vernetzungsmittel (B) einsetzbar sind in Wasser lösbare oder dispergierbare Melamin-Harze, vorzugsweise Melamin-Formaldehyd-Kondensationsprodukte, insbesondere gegebenenfalls veretherte (alkylierte wie beispielsweise C$_1$-C$_6$-alkylierte) Melamin-Formaldehyd-Kondensationsprodukte. Ihre Wasserlöslichkeit bzw. Wasserdispergierbarkeit hängt - abgesehen vom Kondensationsgrad, der möglichst niedrig sein soll - von der Veretherungskomponente ab, wobei nur die niedrigsten Glieder der Alkanol- bzw. Ethylenglykolmonoetherreihe wasserlösliche Kondensate ergeben. Besonders bevorzugt sind mit wenigstens einem C$_{1-6}$-Alkohol, vorzugsweise mit wenigstens einem C$_{1-4}$-Alkohol, insbesondere mit Methanol veretherte (methylierte) Melaminharze wie Melamin-Formaldehyd-Kondensationsprodukte. Bei Verwendung von Lösungsvermittlern als optionale weitere Additive können auch ethanol-, propanol und/oder butanolveretherte Melaminharze, insbesondere die entsprechenden veretherten Melamin-Formaldehyd-Kondensationsprodukte in wässriger Phase gelöst oder dispergiert werden.

In einer bevorzugten Ausführungsform ist das Vernetzungsmittel (B) der erfindungsgemäß eingesetzten Beschichtungszusammensetzung wenigstens ein in Wasser lösbares oder dispergierbares Melamin-Harz, vorzugsweise wenigstens ein in Wasser lösbares oder dispergierbares Melamin-Formaldehyd-Kondensationsprodukt, insbesondere wenigstens ein in Wasser lösbares oder dispergierbares verethertes (alkyliertes), vorzugsweise methyliertes Melamin-Formaldehyd-Kondensationsprodukt.

Vorzugsweise enthält die erfindungsgemäß eingesetzte wässrige Beschichtungszusammensetzung das Vernetzungsmittel (B) in einer Menge von 1 bis 20 Gew.-%, vorzugsweise in einer Menge von 2 bis 15 Gew.-%, besonders bevorzugt in einer Menge von 3 bis 10 Gew.-%, bezogen auf das Gesamtgewicht der wässrigen Beschichtungszusammensetzung.

**Optional vorhandene Komponente (C)**

Die erfindungsgemäß in Schritt (a) eingesetzte Beschichtungszusammensetzung kann eine oder mehrere üblicherweise eingesetzte Komponente(n) (C) enthalten.

Komponente (C) kann dabei wenigstens ein Pigment und/oder Füllstoff sein.

Vorzugsweise ist ein solches Pigment und/oder Füllstoff ausgewählt aus der Gruppe bestehend aus organischen und anorganischen, farbgebenden und füllenden Pigmenten. Beispiele für geeignete anorganische farbgebende Pigmente sind Weißpigmente wie Zinkweiß, Zinksulfid, Titandioxid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Besonders bevorzugt sind Titandioxid und/oder Weißpigmente wie Zinkweiß, Zinksulfid und/oder Lithopone als wenigstens ein Pigment und/oder Füllstoff (C).

Als in der in Schritt (a) eingesetzten wässrigen Beschichtungszusammensetzung enthaltene Pigmente (C) können zudem Effektpigmente eingesetzt werden. Ein Fachmann ist mit dem Begriff der Effektpigmente vertraut. Insbesondere handelt es sich bei Effektpigmenten um solche Pigmente sind, die optisch effektgebend oder farb- und optisch effektgebend, insbesondere optisch effektgebend sind. Eine entsprechende Einteilung der Pigmente kann nach DIN 55944 (Datum: Dezember 2011) erfolgen. Vorzugsweise werden die Effektpigmente aus der Gruppe bestehend aus organischen und anorganischen, optisch effektgebenden, farb- und optisch effektgebenden, Pigmenten, ausgewählt. Bevorzugt werden sie aus der Gruppe bestehend aus organischen und anorganischen, optisch effektgebenden oder farb- und optisch effektgebenden Pigmenten, ausgewählt. Insbesondere werden die organischen und anorganischen, optisch effektgebenden und farb- und optisch effektgebenden Pigmente aus der Gruppe bestehend aus gegebenenfalls beschichteten Metalleffektpigmenten, aus gegebenenfalls beschichteten Metalloxideffektpigmenten, aus aus gegebenenfalls beschichteten Metallen und Nichtmetallen zusammengesetzten Effektpigmenten und gegebenenfalls beschichteten nichtmetallischen Effektpigmenten ausgewählt. Insbesondere sind die gegebenenfalls beschichteten wie z.B. silikatbeschichteten Metalleffektpigmente Aluminiumeffektpigmente, Eiseneffektpigmente oder Kupfereffektpigmente. Ganz besonders bevorzugt sind gegebenenfalls beschichtete wie z.B. silikatbeschichtete Aluminiumeffektpigmente, insbesondere kommerziell erhältliche Produkte der Firma Eckart wie Stapa® Hydrolac, Stapa® Hydroxal, Stapa® Hydrolux und Stapa® Hydrolan, am meisten bevorzugt Stapa® Hydrolux und Stapa® Hydrolan. Die erfindungsgemäß eingesetzten Effektpigmente, insbesondere gegebenenfalls beschichtete wie z.B. silikatbeschichteten Aluminiumeffektpigmente, können in jeder üblichen dem Fachmann bekannten Form wie z.B. einer Blättchen- und/oder einer Plättchenform, insbesondere einer (Corn)flake- oder einer Silverdollar-Form vorliegen. Insbesondere sind die aus Metallen und Nichtmetallen zusammengesetzten Effektpigmente mit Eisenoxid beschichtete plättchenförmige Aluminiumpigmente, wie sie beispielsweise in der europäischen Patentanmeldung EP 0 562 329 A2 beschrieben werden; Glasblättchen, die mit Metallen, insbesondere Aluminium, beschichtet sind; oder Interferenzpigmente, die eine Reflektorschicht aus Metall, insbesondere Aluminium, enthalten und einen starken Farbflop aufweisen.

Insbesondere sind die nichtmetallischen Effektpigmente Perlglanzpigmente, insbesondere Micapigmente; mit Metalloxiden beschichtete, plättchenförmige Graphitpigmente; Interferenzpigmente, die keine Reflektorschicht aus Metall enthalten und einen starken Farbflop aufweisen; plättchenförmige Effektpigmente auf der Basis von Eisenoxid, die einen Farbton von Rosa bis Braunrot aufweisen; oder organische, flüssigkristalline Effektpigmente. Ergänzend wird hinsichtlich der erfindungsgemäß eingesetzten Effektpigmente auf Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Der Gehalt an Pigment und/oder Füllstoff (C) in den erfindungsgemäß in Schritt (a) eingesetzten wässrigen Beschichtungszusammensetzungen kann variieren. Vorzugsweise liegt der Gehalt, bezogen auf die erfindungsgemäß bereitgestellte wässrige Beschichtungszusammensetzung im Bereich von 0,1 bis 50 Gew.-%, bevorzugt im Bereich von 1,0 bis 45 Gew.-%, besonders bevorzugt im Bereich von 2,0 bis 40 Gew.-%, ganz besonders bevorzugt im Bereich von 3,0 bis 35 Gew.-% und insbesondere im Bereich von 4,0 bis 35 Gew.-%. Alternativ enthält die erfindungsgemäß eingesetzte wässrige Beschichtungszusammensetzung das wenigstens eine Pigment und/oder Füllstoff (C) vorzugsweise in einer Menge in einem Bereich von 10 bis 60 Gew.-%, besonders bevorzugt von 15 bis 55 Gew.-%, ganz besonders bevorzugt von 20 bis 50 Gew.-%, insbesondere von 25 bis 45 Gew.-%, von jeweils bezogen auf das Gesamtgewicht der wässrigen Beschichtungszusammensetzung.

### Optional vorhandene Additive (D)

Die erfindungsgemäß in Schritt (a) eingesetzte Beschichtungszusammensetzung kann ein oder mehrere üblicherweise eingesetzte Additive als Komponente (D) enthalten. Vorzugsweise sind diese Additive (D) ausgewählt aus der Gruppe bestehend aus Antioxidantien, Antistatika, Netz- und Dispergiermitteln, Emulgatoren, Verlaufshilfsmitteln, Löslichkeitsvermittlern, Entschäumungsmitteln, Benetzungsmitteln, Stabilisierungsmitteln, vorzugsweise Hitze- und/oder Wärme-Stabilisatoren, Prozess-Stabilisatoren und UV- und/oder Licht-Stabilisatoren, UV-Absorbern, Lichtschutzmitteln, Radikalfängern, Entlüftern, Inhibitoren, Katalysatoren, Wachsen, Netz- und Dispergiermitteln, Flexibilisierungsmitteln, Flammschutzmitteln, Reaktivverdünnern, Trägermedien, Hydrophobierungsmitteln, Hydrophilierungsmitteln, Thixotropiermitteln, Schlagzähmachern, Blähmitteln, Prozesshilfsmitteln, Weichmachern und Gemischen aus den vorstehend genannten weiteren Additiven. Der Additiv-Gehalt an Additiv (D) in der erfindungsgemäß eingesetzten Beschichtungszusammensetzung kann variieren. Vorzugsweise liegt der Gehalt, bezogen auf das Gesamtgewicht der erfindungsgemäß eingesetzten Beschichtungszusammensetzung bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%, bezogen auf das Gesamtgewicht der Beschichtungszusammensetzung.

Vorzugsweise enthält die in Schritt (a) des erfindungsgemäßen Verfahrens eingesetzte Beschichtungszusammensetzung keine Radikalfänger und/oder UV-Absorber als zusätzliche Additive.

### Verwendung

Ein weiterer Gegenstand der vorliegenden Erfindung ist eine Verwendung der im erfindungsgemäßen Verfahren eingesetzten wässrigen Beschichtungszusammensetzung, d.h. einer Beschichtungszusammensetzung, die

(A) wenigstens ein darin gelöstes oder dispergiertes Polymer und
(B) gegebenenfalls wenigstens ein darin gelöstes oder dispergiertes Vernetzungsmittel umfasst,

und zudem wenigstens ein gemischtes Hydroxid der nachstehenden allgemeinen Formel (I) enthält,

$$\{[(M^{2+}_{(1-x)})(M^{3+}_{(x)})(OH)_2][A^{y-}_{(x/y)}]\}\cdot(H_2O)_n \qquad (I),$$

worin

| $M^{2+}$ | für zweiwertige metallische Kationen, |
| $M^{3+}$ | für dreiwertige metallische Kationen, |
| $A^{y-}$ | für Anionen mit einer mittleren Wertigkeit y, |
| x | für einen Wert im Bereich von 0,05 bis 0,50 und |
| n | für einen Wert im Bereich von 0 bis 10 steht, |

worin die Anionen $A^{y-}$ ausgewählt aus der Gruppe bestehend aus $CO_3^{2-}$, $HCO_3^-$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^-$, $SO_3^{2-}$, $HSO_3^-$, $NO_3^-$ und $OH^-$ sind, zur zumindest teilweisen Beschichtung wenigstens einer zumindest teilweise mit wenigstens einer Grundierungsschicht beschichteten Metalloberfläche eines Substrats mit einer Decklackschicht im Coil-Coating-Verfahren.

Alle im Zusammenhang mit dem erfindungsgemäßen Verfahren einschließlich der erfindungsgemäß eingesetzten wässrigen Beschichtungszusammensetzung hierin zuvor beschriebene bevorzugte Ausführungsformen sind auch bevorzugte Ausführungsformen hinsichtlich einer Verwendung dieser erfindungsgemäßen wässrigen Beschichtungszusammensetzung zur zumindest teilweisen Beschichtung wenigstens einer zumindest teilweise mit wenigstens einer Grundierungsschicht beschichteten Metalloberfläche eines Substrats mit einer Decklackschicht im Coil-Coating-Verfahren.

**Decklackschicht**

Ein weiterer Gegenstand der vorliegenden Erfindung ist eine zumindest einseitig auf ein Substrat aufgebrachte Decklackschicht, welche erhältlich ist durch zumindest teilweise Beschichtung wenigstens einer zumindest teilweise mit wenigstens einer Grundierungsschicht beschichteten Metalloberfläche eines Substrats mittels des erfindungsgemäßen Verfahrens.

Die Decklackschicht wird dabei auf wenigstens eine mit wenigstens einer Grundierungsschicht beschichtete Metalloberfläche eines Substrats aufgebracht.

**Zumindest teilweise beschichtetes Substrat**

Ein weiterer Gegenstand der vorliegenden Erfindung ist ein zumindest teilweise und zumindest einseitig mit einer Decklackschicht beschichtetes Substrat, erhältlich nach dem erfindungsgemäßen Verfahren.

Ein weiterer Gegenstand der vorliegenden Erfindung ist ein aus wenigstens einem solchen beschichteten Substrat wie einem beschichteten Metallband hergestelltes Bauteil, vorzugsweise metallisches Bauteil. Solche Bauteile können zum Beispiel Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein.

**Bestimmungsmethoden**

*1. Bestimmung der Hydroxyl-Zahl*

Die Bestimmungsmethode zur Ermittlung der Hydroxyl-Zahl ist angelehnt an DIN 53240-2 (Datum: November 2007). Die Hydroxyl-Zahl-Bestimmung dient zur Ermittlung des Gehaltes an Hydroxyl-Gruppen einer Verbindung. Dabei wird eine Probe einer Verbindung, von der die Hydroxyl-Zahl zu ermitteln ist, mit Essigsäureanhydrid in Gegenwart von 4-Dimethylaminopyridin (DMAP) als Katalysator umgesetzt, wobei die Hydroxyl-Gruppen der Verbindung acetyliert werden. Pro Hydroxyl-Gruppe entsteht dabei ein Molekül Essigsäure. Die anschließende Hydrolyse des überschüssigen Essigsäureanhydrids liefert zwei Moleküle Essigsäure. Der Verbrauch an Essigsäure wird titrimetrisch aus der Differenz des ermittelten Hauptwertes und eines parallel durchzuführenden Blindwertes ermittelt.

Eine Probe wird in einem 150 mL Becherglas mittels einer Analysenwaage auf 0,1 mg genau eingewogen und das Probengefäß anschließend mit einem Rührfisch versehen in einen Probenwechsler eines Titrierautomaten mit Probenwechsler und Dosierstationen für die einzelnen Reagenzien und Lösemittel gestellt (Metrohm Titrando 835 mit integriertem Karl-Fischer-Titrierstand der Firma Metrohm). Nach erfolgter Einwaage wird die Bearbeitungssequenz am Tritierautomaten gestartet. Folgende Abläufe werden vollautomatisch in der nachstehenden Reihenfolge durchgeführt:

- Zugabe von 25 mL THF und 25 mL Katalysatorreagenz in alle Probengefäße.
- Rühren der Proben für 5 - 15 Minuten, je nach Löslichkeit.
- Zugabe von 10 mL Acetylierungsreagenz in alle Probengefäße
- 13 Minuten warten, Rühren für 15 Sekunden, weitere 13 Minuten warten
- Zugabe von 20 mL Hydrolysierungsreagenz (N,N-Dimethylformamid (DMF) und vollentsalztes Wasser (VE-Wasser) im Verhältnis 4:1 Volumen-%) in alle Probengefäße
- 7 Minuten warten, 15 Sekunden rühren (insgesamt 3 mal)
- Titration mit 0,5 mol/l methanolischer KOH

Die Endpunkterkennung erfolgt potentiometrisch. Als Elektrodensystem wird dabei ein Elektrodensystem bestehend aus einer Platin-Titrode und Referenzelektrode (Silber-Silberchlorid mit Lithiumchlorid in Ethanol) eingesetzt.
Das Acetylierungs-Reagenz wird hergestellt, indem in einen 1 000 mL Messkolben 500 mL DMF vorgelegt werden, zu diesen 117 mL Essigsäureanhydrid gegeben werden und mit DMF bis zur Marke von 1 000 ml aufgefüllt wird.
Das Katalysator-Reagenz wird hergestellt, indem 25 g 4-Dimethylaminopyridin (DMAP) in 2,5 L DMF gelöst werden.
Die Hydroxyl-Zahl (OH-Zahl) in mg KOH/g wird nach folgender Formel berechnet:

$$OH - Zahl = \frac{(V_2 - V_1) \cdot c \cdot 56{,}1}{m} + SZ$$

$V1$ = Verbrauch *KOH* im Hauptversuch in mL (Hauptwert)
$V2$ = Verbrauch *KOH* im Blindversuch in mL (Blindwert)
c = die Konzentration der Kaliumhydroxid-Lösung, in mol/L
*m* = Einwaage in g
*SZ* = Säurezahl in mg KOH/g der Probe

*2. Bestimmung des zahlenmittleren und des gewichtsmittleren Molekulargewichts*

Die Bestimmung des zahlenmittleren Molekulargewichts ($M_n$) erfolgt mittels Gel-Permeations-Chromatographie (GPC). Die Bestimmungsmethode ist dabei angelehnt an DIN 55672-1 (Datum: August 2007). Neben dem zahlenmittleren Molekulargewicht können mit dieser Methode zudem das gewichtsmittlere Molekulargewicht ($M_w$) sowie die Polydispersität (Verhältnis von gewichtsmittlerem Molekulargewicht ($M_w$) zu zahlenmittlerem Molekulargewicht ($M_n$)) bestimmt werden.
Es werden 5 mg einer Probe (bezogen auf den Festkörper-Anteil) mittels einer Analysenwaage in 1,5 mL mobiler Phase gelöst. Als mobile Phase wird Tetrahydrofuran eingesetzt, welches 1 mol/L Essigsäure enthält. Zu der Lösung der Probe werden zudem 2 µl Ethylbenzol/mL Lösung hinzugesetzt. Sämtliche gegebenenfalls vorhandene unlösliche Anteile wie beispielsweise Pigmente werden abzentrifugiert oder abfiltriert.
Die Bestimmung des zahlenmittleren Molekulargewichts ($M_n$) erfolgt gegen Polymethylmethacrylat-Standards mit unterschiedlichen Molekulargewichten (PMMA-Standards). Dabei wird vor Beginn einer jeden Bestimmung eine Kalibration durchgeführt. Dazu werden die PMMA-Standards (jeweils mit einer Konzentration von 0,1 mg/mL in mobiler Phase (welche zudem 2 µl Ethylbenzol/mL enthält) eingespritzt. Die Kalibrationskurve (Polynom 5. Ordnung) wird aus den PMMA-Standards mit unterschiedlichen Molekulargewichten erstellt, indem die jeweilige Retentionszeit der einzelnen PMMA-Standards für die Analyserserie ermittelt wird.
Als Gerät wird ein Komplettsystem mit GPC-Säule, Agilent 1100 Pumpe, Autosampler und RI-Detektor eingesetzt. Als Säule wird der Säulensatz PSS 10e3/10e5/10e6 (300 mm x 8 mm; Korngröße 5 µm) eingesetzt.
Folgende Einstellungen werden dabei verwendet:

Injektionsvolumen : 100 µl
Temperatur : 35 °C
Flussrate : 1,0 ml/min

(fortgesetzt)

Laufzeit : 40 min

Die Auswertung erfolgt mittels PSS-Auswertesoftware. Die Konzentration der aus den Trennsäulen nach fallender Knäuelgröße eluierten Moleküle wird mit einem konzentrationsempfindlichen Detektor, insbesondere einem Differentialrefraktometer, gemessen. Aus dem resultierenden Probenchromatogramm werden dann mit der zuvor für das System bestimmten Kalibrationskurve die relative Molmassenverteilung, das zahlenmittlere Molekulargewicht ($M_n$), das gewichtsmittlere Molekulargewicht ($M_w$) sowie der Polydispersitätsfaktor $M_w/M_n$ berechnet. Die Auswertegrenzen werden für jede Probe einzeln festgelegt. Die berechneten Werte für $M_n$ und $M_w$ stellen "äquivalente PMMA-Molekulargewichte" dar. Die absoluten Molekulargewichte der Polymere können von diesen Werten abweichen.

*3. MEK-Test angelehnt an DIN EN 13523-11 (Datum: September 2011)*

Der MEK-Test dient zur Ermittlung der Beständigkeit von Lackfilmen gegen organische Lösemittel (Reib-Test).
Ein Stück Mullkompresse (Art. Nr. 1225221 von der Römer Apotheke Rheinberg) wird mit einem Gummiband auf dem Kopf eines MEK-Hammers befestigt und dann mit MEK (Methylethylketon) als Lösemittel getränkt. Der Hammer wiegt 1200 g und hat einen Griff mit einer Auflagefläche von 2,5 cm$^2$. In den Hammer wird ebenfalls Lösemittel gefüllt, welches konstant in die Mullkompresse nachläuft. Dies garantiert, dass die Kompresse während des ganzen Tests tropfnass ist. Es wird mit der Kompresse auf einem Prüfblech wie einem der in den Beispielen eingesetzten Prüfblechen **TB1** bis **TB5** bzw. **TV1** bis **TV4** einmal hinauf und herab gerieben (= 1 DH, eine Doppelreibung). Die Prüfstrecke beträgt dabei 9,5 cm. Hierbei ist 1 DH in 1 s durchzuführen. Dabei wird auf den Hammer keine zusätzliche Kraft ausgeübt. Der obere und untere Umkehrpunkt an den Prüfblechkanten wird nicht bewertet. Es werden die DH gezählt, die erforderlich sind, den gesamten Lackfilm auf dem Prüfblech bis zum Untergrund abzutragen und dieser Wert angegeben. Falls diese Abtragung nicht bis zum Erreichen von maximal 300 DH erreicht wird, wird nach maximal 300 DH abgebrochen.

*4. Bestimmung der Trockenschichtdicke nach DIN EN ISO 2808 (Verfahren 6B) (Datum: Mai 2007)*

Eine Lackoberfläche eines mit wenigstens diesem Lack beschichteten Substrats wie beispielsweise eines der in den Beispielen eingesetzten Prüfblechen **TB1** bis **TB5** bzw. **TV1** bis **TV4** wird zuerst mit einem dunklen oder schwarzen Edding markiert und dann an dieser markierten Stelle mit einer Schneide V-förmig (Vorgabe des Ritzstichels) bis auf den Untergrund schräg angeritzt. Mit der im PIG Schichtdickenmessgerät der Firma Byk Gardner mit Schneide 3419 (1 Teilstrich = 1 $\mu$m) eingebauten Skala (Mikroskop) kann die Schichtdicke der einzelnen Lackschicht abgelesen werden. Der Ablesefehler liegt bei $\pm$ 10% bei einer Schichtdicke > 2 $\mu$m.

*5. Bestimmung der Säure-Zahl*

Die Bestimmung der Säure-Zahl erfolgt gemäß DIN EN ISO 2114 (Datum: Juni 2002), wobei "Verfahren B" eingesetzt wird. Die angegebene Säure-Zahl entspricht dabei der in der DIN Norm angegebenen Gesamtsäurezahl.

*6. Bestimmung des nicht-flüchtigen Anteils*

Der nicht-flüchtige Anteil, d.h. der Festkörpergehalt (Festkörperanteil) wird gemäß DIN EN ISO 3251 (Datum: Juni 2008) bestimmt. Die Prüfdauer beträgt dabei 60 Minuten bei einer Temperatur von 130°C.

*7. Glanzmessung bei 60° Winkel nach DIN EN 13523-2 (Datum: Oktober 2012)*

Die Glanzmessung bei 60° dient zur Ermittlung des Oberflächenglanzes von lackierten Flächen. Die Bestimmung erfolgt mit einem Glanzgradmessgerät MICRO TRI-GLOSS der Firma BYK. Vor jeder Messung wird das Gerät mit den eingebauten Kalibrierstandards kalibriert. Für die Prüfung wird die Winkeleinstellung von 60° am Gerät ausgewählt. Es werden 5 Messungen in Längsrichtung (Aufziehrichtung bzw. Applikationsrichtung) durchgeführt, in dem das Gerät planar auf die Oberfläche gelegt und der Messwert abgelesen wird. Aus 5 Messwerten wird ein Mittelwert errechnet und im Prüfprotokoll vermerkt. Die Beurteilung erfolgt durch Bestimmung des Glanzwerts (GU) zwischen 0 und 100.

*8. Durchführung des UVCON Test nach DIN EN ISO 4892-3 (Datum: März 2011)*

Das Prüfverfahren ist eine Kurzbewitterungsmethode zur Prüfung der Licht und Wetterechtheit von Beschichtungsstoffen, bei der 8 Fluoreszenzlampen (UVA 340) die Sonnenstrahlung der Außenbewitterung simulieren. Ein Hell-/Dunkelzyklus sowie eine Trocken-/Nassphase simulieren die Wetterbedingungen.

Die Probenkörper werden in Zyklen von jeweils 4 h trockener UV-Bestrahlung bei einer Schwarztafel-Temperatur von (60 ± 3) °C, gefolgt von 4 h Kondensation von Wasser, ohne Bestrahlen, bei einer Schwarztafel-Temperatur von (40 ± 3) °C, beansprucht (Ein Zyklus umfasst 8 h Beanspruchung.)

Bei allen zu prüfenden Tafeln wird vor Beginn und nach festgelegten Zyklen der Glanz bei 60°, wie unter *Punkt 7.* beschrieben, bestimmt. Hierdurch kann der prozentuale Glanzabfall nach festgelegten Zyklen bestimmt werden. Beispielsweise kann der UVCON-Test über eine Gesamtdauer von 2016 h durchgeführt werden.

*9. Bestimmung des mittleren Teilchendurchmessers*

Die Bestimmung des mittleren Teilchendurchmessers erfolgt mittels des Geräts Mastersizer 2000 der Firma Malvern Instruments Ltd, UK durch Laserbeugung. Die Bestimmung wird in Ethanol mit einem Gehalt an Teilchen, deren mittlerer Durchmesser bestimmt werden soll, von 5 Gew.-% durchgeführt, wobei die so erhaltenen Dispersionen der Proben zur vollständigen Dispergierung der Teilchen in Ethanol vor der Messung 5 Minuten mit Ultraschall behandelt werden. Es wird der auf das Probenvolumen bezogene mittlere Teilchendurchmesser ($D_{50}$-Median-Wert) ermittelt.

Die nachfolgenden Beispiele und Vergleichsbeispiele dienen der Erläuterung der Erfindung, sind jedoch nicht einschränkend auszulegen.

Sofern nicht anders angeführt, handelt es sich bei den nachstehenden Angaben in Teilen um Gewichtsteile und bei Angaben in Prozenten jeweils um Gewichtsprozente.

**1**. Chemische Charakterisierung der eingesetzten Rohstoffe:

Bayhydrol® U 2841 XP ist eine wässrige Dispersion eines mit OH Gruppen funktionalisierten Polyester-Polyurethans der Firma Bayer AG mit einem nicht-flüchtigen Anteil von 40 bis 42 Gew.-%.

Byk® 033 ist Entschäumer der Firma Byk.

Luwipal® 066 LF ist ein methyliertes Melamin-Formaldehydharz der Fima BASF SE. Disperbyk® 190 ist ein Netz- und Dispergieradditiv der Firma Byk.

Tiona® 696 umfasst ein Titandioxid-Pigment der Firma Cristal (Gehalt an $TiO_2$: 92 Gew.-%).

Omyacarb® extra CL ist ein von der Firma Omya Shunda (Linkou) Fine Chemical Co., Ltd. erhältliches Calciumcarbonat mit einem mittleren Teilchendurchmesser von 1,5 - 13 μm.

Bayhydur® BL XP 2706 ist eine wässrige Dispersion eines aliphatischen blockierten Polyisocyanats der Firma Bayer AG mit einem nicht-flüchtigen Anteil von 38 bis 42 Gew.-%.

Cymel® 325 umfasst ein methyliertes Melaminharz der Firma Allnex mit einem nicht-flüchtigen Anteil von 78 bis 82 Gew.-%.

Hydropalat® WE 3370 ist ein kommerziell erhältliches Verlaufmittel der Firma BASF SE.

Bei Tinstab® BL-277 handelt es sich um Dibutylzinndilaurat.

MgAl1 ist ein Hydrotalcit bestehend aus Magnesium-Aluminium-Zink-Hydroxid-Carbonat mit einem mittleren Teilchendurchmesser von 0,59 μm.

MgAl2 ist ein Hydrotalcit bestehend aus Magnesium-Aluminium-Hydroxid-Carbonat mit einem mittleren Teilchendurchmesser von 0,45 μm.

**2**. Herstellung von Beschichtungszusammensetzungen

Es werden die in den nachfolgenden Tabellen 1, 2 und 3 dargestellten erfindungsgemäß eingesetzten Beschichtungszusammensetzungen **B1** bis **B5** sowie die Vergleichsbeschichtungszusammensetzungen **V1** bis **V4** hergestellt.

Tabelle 1:

| Position | Komponenten | V1 | V2 | V3 | B1 | B2 |
|----------|-------------|-----|-----|-----|-----|-----|
| 1 | Bayhydrol® U 2841 XP | 26,18 | 26,18 | 26,18 | 26,18 | 26,18 |
| 2 | Disperbyk® 190 | 7,49 | 7,49 | 7,49 | 7,49 | 7,49 |
| 3 | Byk® 033 | 0,40 | 0,40 | 0,40 | 0,40 | 0,40 |
| 4 | Tiona® 696 | 29,94 | 14,97 | 22,45 | 22,45 | 22,45 |
| 5 | Omyacarb® extra CL | - | 14,97 | 7,49 | - | - |
| 6 | MgAl1 | - | - | - | 6,00 | - |
| 7 | MgAl2 | - | - | - | - | 6,00 |
| 8 | Bayhydrol® U 2841 XP | 30,00 | 30,00 | 30,00 | 30,00 | 30,00 |
| 9 | Luwipal® 066 LF | 5,80 | 5,80 | 5,80 | 5,80 | 5,80 |
| 10 | Byk® 033 | 0,20 | 0,20 | 0,20 | 0,20 | 0,20 |
| **Gewichtsteile gesamt** | | **100** | **100** | **100** | **98,5** | **98,5** |

Die jeweiligen Komponenten gemäß Positionen 1-7 der Tabelle 1 werden jeweils an einem Dissolver vermischt und anschließend in einer Perlmühle bis zu einem Energieeintrag von 75 Wh/kg dispergiert. Zu den jeweiligen so erhaltenen Mischungen werden im Anschluss die jeweiligen Komponenten gemäß Positionen 8-10 der Tabelle 1 unter Erhalt von **V1** bis **V3** bzw. **B1** und **B2** am Dissolver gegeben und gerührt. Zu jeder der Zusammensetzungen wird im Anschluss 1 Gew.-% Hydropalat® WE 3370, jeweils bezogen auf das Gesamtgewicht, gegeben. Zu **V2** wurden zudem 12 Gew.-%, zu **V3** 7 Gew.-% deionisiertes Wasser gegeben, jeweils bezogen auf das jeweilige Gesamtgewicht.

Tabelle 2:

| Position | Komponenten | V4 | B3 |
|----------|-------------|-----|-----|
| 1 | Bayhydrol® U 2841 XP | 25,82 | 26,21 |
| 2 | Disperbyk® 190 | 7,38 | 7,49 |
| 3 | Byk® 033 | 0,39 | 0,40 |
| 4 | Tiona® 696 | 29,53 | 22,48 |
| 5 | MgAl2 | - | 6,00 |
| 6 | Bayhydrol® U 2841 XP | 29,59 | 30,03 |
| 7 | Cymel® 325 | 7,10 | 7,21 |
| 8 | Byk® 033 | 0,19 | 0,19 |
| **Gewichtsteile gesamt** | | **100** | **100** |

Die jeweiligen Komponenten gemäß Positionen 1-5 der Tabelle 2 werden jeweils an einem Dissolver vermischt und anschließend in einer Perlmühle bis zu einem Energieeintrag von 75 Wh/kg dispergiert. Zu den jeweiligen so erhaltenen Mischungen werden im Anschluss die jeweiligen Komponenten gemäß Positionen 6-8 der Tabelle 2 unter Erhalt von **V4** bzw. **B3** am Dissolver gegeben und gerührt. Zu jeder der Zusammensetzungen wird im Anschluss 1 Gew.-% Hydropalat® WE 3370, jeweils bezogen auf das Gesamtgewicht, gegeben.

Tabelle 3:

| Position | Komponenten | B4 | B5 |
|---|---|---|---|
| 1 | Bayhydrol® U 2841 XP | 19,16 | 16,59 |
| 2 | Disperbyk® 190 | 5,48 | 4,74 |
| 3 | Byk® 033 | 0,29 | 0,25 |
| 4 | Tiona® 696 | 17,30 | 14,97 |
| 5 | MgAl2 | 4,62 | 4,00 |
| 6 | Bayhydrol® U 2841 XP | 21,96 | 19,01 |
| 7 | Bayhydur® BL XP 2706 | 31,04 | 40,31 |
| 8 | Byk® 033 | 0,14 | 0,13 |
| **Gewichtsteile gesamt** | | **100** | **100** |

Die jeweiligen Komponenten gemäß Positionen 1-5 der Tabelle 3 werden jeweils an einem Dissolver vermischt und anschließend in einer Perlmühle bis zu einem Energieeintrag von 75 Wh/kg dispergiert. Zu den jeweiligen so erhaltenen Mischungen werden im Anschluss die jeweiligen Komponenten gemäß Positionen 6-8 der Tabelle 3 unter Erhalt von **B4** und **B5** am Dissolver gegeben und gerührt. Zu jeder der Zusammensetzungen werden im Anschluss 3 Gew.-% Hydropalat® WE 3370 sowie 0,3 Gew.-% Tinstab® BL-277, jeweils bezogen auf das Gesamtgewicht, gegeben.

**3**. Herstellung von beschichteten Substraten

Ein verzinktes Stahlblech OE HDG 5 der Firma Chemetall (Dicke 0,81 mm; Fläche: 10,5 cm · 30 cm) wird zunächst alkalisch und dann mit dem kommerziell erhältlichen Produkt Gardoclean® S5160 der Firma Chemetall gereinigt, mit deionisiertem Wasser abgespült und im Anschluss mit dem kommerziell erhältlichen Produkt Granodine® 1455T der Firma Henkel vorbehandelt. Dann wird auf ein so gereinigtes und vorbehandeltes Blech eine Primer-Schicht mit einem kommerziell erhältlichen Primer (Coiltec® Universal P CF der Firma BASF Coatings GmbH) aufgetragen und in einem Durchlaufofen über eine Dauer von 49 s bei einer Substrattemperatur von 216°C getrocknet. Die Primer-Schicht weist eine Trockenschichtdicke von 5 $\mu$m auf. Das wie vorstehend gereinigte und mit einer Primer-Schicht versehene verzinkte Stahlblech wird nachfolgend als Blech **T** bezeichnet. Anschließend wird jeweils eine der Beschichtungszusammensetzungen **B1** bis **B5** bzw. **V1** bis **V4** als Decklackbeschichtung mit einer Stabrakel jeweils auf ein so beschichtetes Blech **T** aufgebracht und anschließend unter Coil-Coating-Bedingungen, nämlich bei einer Substrattemperatur von 249°C in einem Durchlaufofen über eine Dauer von 63 s ausgehärtet. Die Trockenschichtdicke des so erhaltenen Decklacks beträgt dabei jeweils 20 $\mu$m. Es werden die Bleche **TB1**, **TB2**, **TB3**, **TB4** und **TB5** bzw. **TV1**, **TV2**, **TV3** und **TV4** erhalten.

**4**. Ergebnisse einiger anwendungstechnischer Prüfungen

Die Ergebnisse einiger anwendungstechnischer Prüfungen, mittels derer die Beispiele und Vergleichsbeispiele **TB1**, **TB2**, **TB3**, **TB4** und **TB5** bzw. **TV1**, **TV2**, **TV3** und **TV4** untersucht worden sind, sind in nachfolgender Tabelle 4 dargestellt. Die Bestimmung der einzelnen Parameter erfolgt dabei jeweils nach der vorstehend angegebenen Methode.

Tabelle 4:

|  | TV1 | TV2 | TV3 | TB1 | TB2 | TV4 | TB3 | TB4 | TB5 |
|---|---|---|---|---|---|---|---|---|---|
| MEK | >300 | >300 | >300 | 20 | 10 | >300 | 220 | >100 | >100 |
| Glanz bei 60°, bestimmt *vor* Durchführung des UVCON-Tests | 65 | 67 | 72 | 39 | 33 | 63 | 48 | 18 | 21 |
| Glanz bei 60°, bestimmt *nach* Durchführung des UVCON-Tests über 2016 h | 18 | 10 | 13 | 34 | 32 | 37 | 40 | 27 | 24 |
| Glanzerhalt nach Durchführung des UVCON-Tests über 2016 h [%] | 28 | 15 | 18 | **87** | **97** | 59 | **83** | **150** | **114** |

Aus den Ergebnissen in Tabelle 4 ist insbesondere ersichtlich, dass eine Verwendung der erfindungsgemäß eingesetzten Beschichtungszusammensetzungen **B1** bis **B5** als Decklackschicht für ein Substrat **T** im Vergleich zu den Vergleichsbeschichtungszusammensetzungen **V1** bis **V4** zu einer deutlichen Verbesserung des Glanzerhaltes (in %) nach Durchführung des UVCON Tests über eine Dauer von 2016 h führt. Gleichzeitig ist der Absolutwert des Glanzes nach Durchführung des UVCON Tests bei den erfindungsgemäß eingesetzten Beschichtungszusammensetzungen **B1** bis **B5** höher als bei den jeweils zu vergleichenden Vergleichsbeschichtungszusammensetzungen **V1** bis **V4**, obwohl letztere Formulierungen einen deutlich höheren Anfangsglanz aufweisen. Die erfindungsgemäß eingesetzten Beschichtungszusammensetzungen **B4** und **B5** glänzen im Verlauf des Tests sogar auf.

**Patentansprüche**

1.   Ein Verfahren zum zumindest einseitigen Aufbringen einer Decklackschicht auf ein Substrat umfassend wenigstens einen Schritt (a), nämlich eine

   (a) zumindest teilweise Beschichtung wenigstens einer zumindest teilweise mit wenigstens einer Grundierungsschicht beschichteten Metalloberfläche eines Substrats mit einer wässrigen Beschichtungszusammensetzung, wobei die wässrige Beschichtungszusammensetzung

      (A) wenigstens ein darin gelöstes oder dispergiertes Polymer und
      (B) gegebenenfalls wenigstens ein darin gelöstes oder dispergiertes Vernetzungsmittel umfasst,

   **dadurch gekennzeichnet,**
   **dass** die wässrige Beschichtungszusammensetzung zudem wenigstens ein gemischtes Hydroxid der nachstehenden allgemeinen Formel (I) enthält,

   $$\{[(M^{2+}_{(1-x)})(M^{3+}_{(x)})(OH)_2][A^{y-}_{(x/y)}]\}\cdot(H_2O)_n \qquad (I),$$

   worin

      $M^{2+}$ für zweiwertige metallische Kationen,
      $M^{3+}$ für dreiwertige metallische Kationen,
      $A^{y-}$ für Anionen mit einer mittleren Wertigkeit y,
      x für einen Wert im Bereich von 0,05 bis 0,50 und
      n für einen Wert im Bereich von 0 bis 10 steht,

   worin die Anionen $A^{y-}$ ausgewählt aus der Gruppe bestehend aus $CO_3^{2-}$, $HCO_3^{-}$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^{-}$, $SO_3^{2-}$, $HSO_3^{-}$, $NO_3^{-}$ und $OH^-$ sind, und
   **dass** das Verfahren ein Coil-Coating-Verfahren ist.

2.   Das Verfahren gemäß Anspruch 1, **dadurch gekennzeichnet, dass** das wenigstens eine gemischte Hydroxid der allgemeinen Formel (I) einen mittleren Teilchendurchmesser im Bereich von 0,1 bis 10 $\mu$m aufweist.

**3.** Das Verfahren gemäß Anspruch 1 oder 2, **dadurch gekennzeichnet, dass**
die zweiwertigen metallischen Kationen $M^{2+}$ ausgewählt sind aus der Gruppe bestehend aus $Zn^{2+}$, $Mg^{2+}$, $Ca^{2+}$, $Ba^{2+}$, $Cu^{2+}$, $Ni^{2+}$, $Co^{2+}$, $Fe^{2+}$, $Mn^{2+}$, $Cd^{2+}$, $Sn^{2+}$, $Pb^{2+}$ und $Sr^{2+}$ sowie Mischungen davon, insbesondere ausgewählt sind aus der Gruppe bestehend aus $Zn^{2+}$ und/oder $Mg^{2+}$, und
die dreiwertigen metallischen Kationen $M^{3+}$ ausgewählt sind aus der Gruppe bestehend aus $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, und $La^{3+}$ sowie Mischungen davon, insbesondere für $Al^{3+}$ stehen.

**4.** Das Verfahren gemäß einem der vorstehenden Ansprüche, **dadurch gekennzeichnet, dass** der Parameter x für einen Wert im Bereich von 0,15 bis 0,40 steht.

**5.** Das Verfahren gemäß einem der vorstehenden Ansprüche, **dadurch gekennzeichnet, dass** die Anionen $A^{y-}$ ausgewählt sind aus der Gruppe bestehend aus $CO_3^{2-}$ und Mischungen aus $CO_3^{2-}$ und wenigstens einem weiteren Anion ausgewählt aus der Gruppe bestehend aus $Cl^-$, $Br^-$, $BO_3^{3-}$, $PO_4^{3-}$, $SO_4^{2-}$, $HSO_4^-$, $SO_3^{2-}$, $NO_3^-$ und $OH^-$.

**6.** Das Verfahren gemäß einem der vorstehenden Ansprüche, **dadurch gekennzeichnet, dass** das wenigstens eine gemischte Hydroxid der allgemeinen Formel (I) in der wässrigen Beschichtungszusammensetzung in einer Menge in einem Bereich von 1,0 bis 15,0 Gew.-%, bezogen auf das Gesamtgewicht der Beschichtungszusammensetzung, enthalten ist.

**7.** Das Verfahren gemäß einem der vorstehenden Ansprüche, **dadurch gekennzeichnet, dass** das wenigstens eine Polymer (A) OH-Gruppen aufweist und auf wenigstens einem Polyurethan und/oder wenigstens einem Polyester basiert.

**8.** Das Verfahren gemäß einem der vorstehenden Ansprüche, **dadurch gekennzeichnet, dass** die Beschichtungszusammensetzung wenigstens ein Vernetzungsmittel (B) enthält, welches ausgewählt ist aus der Gruppe bestehend aus gegebenenfalls alkylierten Melamin-Formaldehyd-Kondensationsprodukten, blockierten Polyisocyanaten und unblockierten Polyisocyanaten sowie Mischungen davon.

**9.** Das Verfahren gemäß einem der vorstehenden Ansprüche, **dadurch gekennzeichnet, dass** das Verfahren vor Durchführung des Schrittes (a) den oder die folgenden Schritt(e) umfasst:

(1) gegebenenfalls Reinigung der Metalloberfläche des Substrats von Verschmutzungen,
(2) gegebenenfalls zumindest teilweises Aufbringen wenigstens einer Vorbehandlungsschicht auf die gegebenenfalls gereinigte Metalloberfläche des Substrats,
(3) zumindest teilweises Aufbringen wenigstens einer Grundierungsschicht auf die gegebenenfalls einer Behandlung gemäß den Schritten (1) und/oder (2) unterworfene Metalloberfläche und gegebenenfalls Aushärten der so aufgetragenen Grundierungsschicht oder der Vorbehandlungsschicht und der Grundierungsschicht.

**10.** Das Verfahren gemäß einem der vorstehenden Ansprüche, **dadurch gekennzeichnet, dass** das Verfahren nach Durchführung des Schrittes (a) zudem den Schritt (b) umfasst, nämlich
(b) Aushärten der aufgetragenen Decklackschicht.

**11.** Das Verfahren gemäß Anspruch 10, **dadurch gekennzeichnet, dass** die Aushärtung bei einer Substrattemperatur im Bereich von ≥ 170°C bis 350 °C über eine Dauer von 20 s bis 180 s erfolgt.

**12.** Das Verfahren gemäß einem der vorstehenden Ansprüche, **dadurch gekennzeichnet, dass** das Verfahren ein kontinuierliches Verfahren ist.

**13.** Eine zumindest einseitig auf ein Substrat aufgebrachte Decklackschicht, welche erhältlich ist durch zumindest teilweise Beschichtung wenigstens einer zumindest teilweise mit wenigstens einer Grundierungsschicht beschichteten Metalloberfläche eines Substrats mittels des Verfahrens gemäß einem der Ansprüche 1 bis 12.

**14.** Ein zumindest teilweise und zumindest einseitig mit einer Decklackschicht beschichtetes Substrat, erhältlich nach dem Verfahren gemäß einem der Ansprüche 1 bis 12.

**15.** Eine Verwendung einer wässrigen Beschichtungszusammensetzung zur zumindest teilweisen Beschichtung wenigstens einer zumindest teilweise mit wenigstens einer Grundierungsschicht beschichteten Metalloberfläche eines Substrats mit einer Decklackschicht im Coil-Coating-Verfahren, **dadurch gekennzeichnet, dass** die in Schritt (a) des Verfahrens gemäß einem der Ansprüche 1 bis 12 eingesetzte wässrige Beschichtungszusammensetzung verwendet wird.

**Claims**

1. A process for applying a topcoat to at least one side of a substrate, comprising at least one step (a) of

    (a) at least partly coating at least one substrate metal surface, at least partly coated with at least one primer coat, with an aqueous coating composition,
    the aqueous coating composition comprising

      (A) at least one polymer dissolved or dispersed therein and
      (B) optionally at least one crosslinking agent dissolved or dispersed therein,

    wherein
    the aqueous coating composition further comprises at least one mixed hydroxide of the general formula (I) below

    $$\{[(M^{2+}_{(1-x)})(M^{3+}_{(x)})(OH)_2][A^{y-}_{(x/y)}]\}\cdot(H_2O)_n \qquad (I),$$

    in which

      $M^{2+}$ stands for divalent metallic cations,
      $M^{3+}$ stands for trivalent metallic cations,
      $A^{y-}$ stands for anions of average valence y,
      x stands for a value in the range from 0.05 to 0.50, and
      n stands for a value in the range from 0 to 10,

    wherein the anions $A^{y-}$ are selected from the group consisting of $CO_3^{2-}$, $HCO_3^-$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^-$, $SO_3^{2-}$, $HSO_3^-$
    , $NO_3^-$ and $OH^-$, and
    wherein the process is a coil coating process.

2. The process as claimed in claim 1, wherein the at least one mixed hydroxide of the general formula (I) has an average particle diameter in the range from 0.1 to 10 $\mu$m.

3. The process as claimed in claim 1 or 2, wherein
the divalent metallic cations $M^{2+}$ are selected from the group consisting of $Zn^{2+}$, $Mg^{2+}$, $Ca^{2+}$, $Ba^{2+}$, $Cu^{2+}$, $Ni^{2+}$, $Co^{2+}$, $Fe^{2+}$, $Mn^{2+}$, $Cd^{2+}$, $Sn^{2+}$, $Pb^{2+}$, and $Sr^{2+}$, and also mixtures thereof, and more particularly are selected from the group consisting of $Zn^{2+}$ and/or $Mg^{2+}$, and
the trivalent metallic cations $M^{3+}$ are selected from the group consisting of $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$, and $La^{3+}$, and also mixtures thereof, and more particularly are $Al^{3+}$.

4. The process as claimed in any of the preceding claims, wherein the parameter x stands for a value in the range from 0.15 to 0.40.

5. The process as claimed in any of the preceding claims, wherein the anions $A^{y-}$ are selected from the group consisting of $CO_3^{2-}$ and mixtures of $CO_3^{2-}$ and at least one further anion selected from the group consisting of $Cl^-$, $Br^-$, $BO_3^{3-}$, $PO_4^{3-}$, $SO_4^{2-}$, $HSO_4^-$, $SO_3^{2-}$, $NO_3^-$, and $OH^-$.

6. The process as claimed in any of the preceding claims, wherein the at least one mixed hydroxide of the general formula (I) is included in the aqueous coating composition in an amount in a range from 1.0 to 15.0 wt%, based on the total weight of the coating composition.

7. The process as claimed in any of the preceding claims, wherein the at least one polymer (A) has OH groups and is based on at least one polyurethane and/or at least one polyester.

8. The process as claimed in any of the preceding claims, wherein the coating composition comprises at least one crosslinking agent (B) which is selected from the group consisting of optionally alkylated melamine-formaldehyde condensation products, blocked polyisocyanates and nonblocked polyisocyanates, and also mixtures thereof.

9. The process as claimed in any of the preceding claims, wherein the process, before step (a) is carried out, comprises the following step or steps:

(1) optionally cleaning the substrate metal surface to remove soiling,
(2) optionally at least partly applying at least one pretreatment coat to the optionally cleaned substrate metal surface,
(3) at least partly applying at least one primer coat to the metal surface optionally subjected to treatment as per steps (1) and/or (2), and optionally curing the thus-applied primer coat or curing the pretreatment coat and the primer coat.

10. The process as claimed in any of the preceding claims, wherein the process, after step (a) has been carried out, further comprises the step (b) of (b) curing the applied topcoat.

11. The process as claimed in claim 10, wherein the curing takes place at a substrate temperature in the range from $\geq$ 170°C to 350°C over a time of 20 s to 180 s.

12. The process as claimed in any of the preceding claims, wherein the process is a continuous process.

13. A topcoat applied to at least one side of a substrate, said topcoat being obtainable by at least partial coating of at least one substrate metal surface, at least partly coated with at least one primer coat, by means of the process as claimed in any of claims 1 to 12.

14. A substrate coated at least partly and on at least one side with a topcoat, obtainable by the process as claimed in any of claims 1 to 12.

15. A use of an aqueous coating composition for at least partly coating at least one substrate metal surface, at least partly coated with at least one primer coat, with a topcoat in a coil coating process, wherein the aqueous coating composition employed in step (a) of the process as claimed in any of claims 1 to 12 is used.

**Revendications**

1. Procédé servant à appliquer au moins sur un côté une couche de vernis de recouvrement sur un substrat, comprenant au moins une étape (a), à savoir

(a) un revêtement au moins partiel d'au moins une surface métallique, revêtue au moins en partie d'au moins une couche d'apprêt, d'un substrat avec une composition de revêtement aqueuse, dans lequel la composition de revêtement aqueuse comprend

(A) au moins un polymère dissous ou dispersé dans celle-ci et
(B) éventuellement au moins un agent de réticulation dissous ou dispersé dans celle-ci,

**caractérisé en ce**
**que** la composition de revêtement aqueuse contient de plus au moins un hydroxyde mélangé de la formule (I) générale ci-après,

$$\{[(M^{2+}_{(1-x)})(M^{3+}_{(x)}(OH)_2][A^{y-}_{(x/y)}]\}\cdot(H_2O)_n \qquad (I),$$

dans laquelle

$M^{2+}$ représente des cations métalliques divalents,
$M^{3+}$ représente des cations métalliques trivalents,
$A^{y-}$ représente des anions avec une valence y moyenne,
x représente une valeur dans la plage de 0,05 à 0,50 et
n représente une valeur dans la plage de 0 à 10,

**EP 3 283 575 B1**

dans laquelle les anions $A^{y-}$ sont choisis parmi le groupe constitué de $CO_3^{2-}$, $HCO_3^-$, $F^-$, $Cl^-$, $Br^-$, $BO_3^{3-}$, $PO_4^{3-}$, $H_2PO_4^-$, $HPO_4^{2-}$, $SO_4^{2-}$, $HSO_4^-$, $SO_3^{2-}$, $HSO_3^-$, $NO_3^-$ et $OH^-$, et

**que** le procédé est un procédé de couchage sur bande.

2.  Procédé selon la revendication 1, **caractérisé en ce que** l'au moins un hydroxyde mélangé de la formule (I) générale présente un diamètre de particule moyen dans la plage de 0,1 à 10 μm.

3.  Procédé selon la revendication 1 ou 2, **caractérisé en ce que**
les cations métalliques divalents $M^{2+}$ sont choisis parmi le groupe constitué de $Zn^{2+}$, $Mg^{2+}$, $Ca^{2+}$, $Ba^{2+}$, $Cu^{2+}$, $Ni^{2+}$, $Co^{2+}$, $Fe^{2+}$, $Mn^{2+}$, $Cd^{2+}$, $Sn^{2+}$, $Pb^{2+}$ et $Sr^{2+}$ ainsi que de mélanges de ceux-ci, en particulier sont choisis parmi le groupe constitué de $Zn^{2+}$ et/ou de $Mg^{2+}$, et
les cations métalliques trivalents $M^{3+}$ sont choisis parmi le groupe constitué de $Al^{3+}$, $Bi^{3+}$, $Fe^{3+}$, $Cr^{3+}$, $Ga^{3+}$, $Ni^{3+}$, $Co^{3+}$, $Mn^{3+}$, $V^{3+}$, $Ce^{3+}$ et $La^{3+}$ ainsi que de mélanges de ceux-ci, en particulier représentent $Al^{3+}$.

4.  Procédé selon l'une quelconque des revendications précédentes, **caractérisé en ce que** le paramètre x représente une valeur dans la plage de 0,15 à 0,40.

5.  Procédé selon l'une quelconque des revendications précédentes, **caractérisé en ce que** les anions $A^{y-}$ sont choisis parmi le groupe constitué de $CO_3^{2-}$ et de mélanges composés de $CO_3^{2-}$ et d'au moins un autre anion choisi parmi le groupe constitué de $Cl^-$, $Br^-$, $BO3^{3-}$, $PO_4^{3-}$, $SO_4^{2-}$, $HSO_4^-$, $SO_3^{2-}$, $NO_3^-$ et $OH^-$.

6.  Procédé selon l'une quelconque des revendications précédentes, **caractérisé en ce que** l'au moins un hydroxyde mélangé de la formule (I) générale est contenu dans la composition de revêtement aqueuse en une quantité dans une plage de 1,0 à 15,0 % en poids, par rapport au poids total de la composition de revêtement.

7.  Procédé selon l'une quelconque des revendications précédentes, **caractérisé en ce que** l'au moins un polymère (A) présente des groupes OH et est à base d'au moins un polyuréthane et/ou d'au moins un polyester.

8.  Procédé selon l'une quelconque des revendications précédentes, **caractérisé en ce que** la composition de revêtement contient au moins un agent de réticulation (B), lequel est choisi parmi le groupe constitué de produits de condensation de mélamine-formaldéhyde éventuellement alkylés, de polyisocyanates bloqués et de polyisocyanates non bloqués ainsi que de mélanges de ceux-ci.

9.  Procédé selon l'une quelconque des revendications précédentes, **caractérisé en ce que** le procédé comprend avant la mise en oeuvre de l'étape (a) la ou les étapes suivantes :

    (1) éventuellement de nettoyage de la surface métallique du substrat d'impuretés,
    (2) éventuellement d'application au moins partielle d'au moins une couche de traitement préliminaire sur la surface métallique éventuellement nettoyée du substrat,
    (3) d'application au moins partielle d'au moins une couche d'apprêt sur la surface métallique éventuellement soumise à un traitement selon les étapes (1) et/ou (2) et de durcissement éventuellement de la couche d'apprêt ainsi appliquée ou de la couche de traitement préliminaire et de la couche d'apprêt.

10. Procédé selon l'une quelconque des revendications précédentes, **caractérisé en ce que** le procédé comprend après la mise en oeuvre de l'étape (a) de plus l'étape (b), à savoir (b) de durcissement de la couche de vernis de recouvrement appliquée.

11. Procédé selon la revendication 10, **caractérisé en ce que** le durcissement est effectué à une température de substrat dans la plage de ≥ 170 °C à 350 °C sur une durée de 20 s à 180 s.

12. Procédé selon l'une quelconque des revendications précédentes, **caractérisé en ce que** le procédé est un procédé continu.

13. Couche de vernis de recouvrement appliquée au moins sur un côté sur un substrat, laquelle est obtenue par un revêtement au moins partiel d'au moins une surface métallique, revêtue au moins en partie d'au moins une couche d'apprêt, d'un substrat au moyen du procédé selon l'une quelconque des revendications 1 à 12.

14. Substrat revêtu au moins en partie et au moins sur un côté d'une couche de vernis de recouvrement, obtenu selon

24

le procédé selon l'une quelconque des revendications 1 à 12.

15. Utilisation d'une composition de revêtement aqueuse servant à revêtir au moins en partie au moins une surface métallique, revêtue au moins en partie d'au moins une couche d'apprêt, d'un substrat avec une couche de vernis de recouvrement dans le procédé de couchage sur bande, **caractérisée en ce que** la composition de revêtement aqueuse utilisée lors de l'étape (a) du procédé selon l'une quelconque des revendications 1 à 12 est utilisée.

**IN DER BESCHREIBUNG AUFGEFÜHRTE DOKUMENTE**

**In der Beschreibung aufgeführte Patentdokumente**

- WO 2006079628 A2
- WO 2009062621 A1
- WO 2010130308 A1
- WO 2013056846 A1
- WO 2010094764 A1
- EP 1172396 A1
- DE 102009021071 A1

- WO 2009115504 A1
- WO 2006079628 A1
- WO 2010066642 A1
- US 6514473 A
- WO 9115528 A1
- EP 0562329 A2

**In der Beschreibung aufgeführte Nicht-Patentliteratur**

- Römpp Lexikon Lacke und Druckfarben. Füllstoffe. Georg Thieme Verlag, 1998, 250

- Römpp Lexikon Lacke und Druckfarben. Effektpigmente. Georg Thieme Verlag, 1998, 176